(19) Europäisches Patentamt
European Patent Office
Office européen des brevets

(11) **EP 3 034 146 A1**

(12) **EUROPÄISCHE PATENTANMELDUNG**

(43) Veröffentlichungstag:
**22.06.2016   Patentblatt 2016/25**

(51) Int Cl.:
***B01D 29/15*** *(2006.01)*    ***B01D 29/52*** *(2006.01)*
***B01D 29/92*** *(2006.01)*

(21) Anmeldenummer: **15198297.2**

(22) Anmeldetag: **07.12.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **18.12.2014   DE 102014226431**

(71) Anmelder: **Krones AG**
**93073 Neutraubling (DE)**

(72) Erfinder:
• **Stelle, Knut**
**93073 Neutraubling (DE)**
• **Zacharias, Jörg**
**93073 Neutraubling (DE)**

(74) Vertreter: **Grünecker Patent- und Rechtsanwälte PartG mbB**
**Leopoldstraße 4**
**80802 München (DE)**

(54) **HYDRODYNAMISCH OPTIMIERTE FILTERKERZE**

(57)     Die vorliegende Erfindung stellt eine Filterkerze für Anschwemmfilter zur Filtrierung und / oder Stabilisierung von Fluiden, insbesondere von Bier, mit einem Filterkörper, einem im Innenraum des Filterkörpers angeordneten Innenkörper und wenigstens einem zwischen dem Filterkörper und dem Innenkörper gebildeten Filtratkanal zur Verfügung, wobei der Filterkörper und / oder der Innenkörper derart ausgebildet sind, dass einer Filtratströmung in dem Filtratkanal bei Betrieb der Filterkerze ein Strömungsprofil gegeben wird, das eine Vergleichmäßigung der Anschwemmung eines Filterhilfsmittels an einer äußeren Fläche des Filterkörpers bewirkt.

FIG. 1

**Beschreibung**

**Gebiet der Erfindung**

Die vorliegende Erfindung betrifft eine hydrodynamisch optimierte Filterkerze für einen Anschwemmkerzenfilter zur Filtration und/oder Stabilisierung von Fluiden, insbesondere von Bier, und insbesondere eine Filterkerze mit Innenkörper. Weiterhin betrifft die Erfindung einen Anschwemmkerzenfilter mit einer solchen Filterkerze sowie die Verwendung einer solchen Filterkerze zur Filtration und/oder Stabilisierung von Fluiden, insbesondere von Bier.

**Hintergrund der Erfindung**

Am Ende des Reifungsprozesses weist Bier eine Vielzahl an Hefe- und Trübungspartikeln auf, die insbesondere zum Zwecke der Verbrauchererwartungen (z. B. Glanzfeinheit) und der Haltbarmachung durch eine Filtration zu entfernen sind. Hierzu wird das trübe Bier, d. h. das Unfiltrat, mittels einer Filtervorrichtung in ein blankes Filtrat und einen zurückbleibenden Filterrückstand (Filterkuchen) getrennt.

Es ist bekannt, Anschwemmkerzenfilter für die Filtration oder Stabilisierung von Bier zu verwenden. In einem Filterkessel eines Anschwemmkerzenfilters befindet sich eine Vielzahl von Filterkerzen, die beispielsweise hängend an einer Kopfplatte oder an einem sog. Register befestigt sind. Die Filterkerzen besitzen im Allgemeinen einen Filterkörper, der z. B. einen dünnen Draht aufweist, wobei Spalte zwischen den Drahtwindungen als Durchlässe für das zu filtrierende Medium dienen. Die EP 1 243 303 B1 lehrt beispielsweise eine Filterkerze mit einem hohlzylindrischen Innenkörper mit geschlossenem Außenmantel im Innenraum eines Filterkörpers, bei der sich zwischen dem Filterkörper und dem Außenmantel des Innenkörpers Strömungskanäle für das Filtrat ausbilden. Eine ähnliche Filterkerze wird auch von der EP 1 243 301 B1 offenbart, wobei durch Neigung der Fläche des gewundenen Drahtes des Filterkörpers und einem sich daraus ergebenden Versatz der Flächen von aufeinanderfolgenden Windungen eine verbesserte Haftung der Anschwemmschicht erzielt wird.

Zur Filtration werden dem zu filtrierenden Bier Filterhilfsmittel wie beispielsweise Kieselgur, Zellulose, Perlite, Aktivkohle, Kunststofffasern, Glasfasern, Zellstofffasern oder dergleichen zugesetzt. Zur Stabilisierung werden dem zu stabilisierenden Bier Stabilisierungsmittel wie beispielweise PVPP (Polyvinylpyrrolidon) oder Crosspure® zugesetzt. Die Filterhilfsmittel werden bei Beginn des Filtrationsvorgangs an der Außenfläche des Filterkörpers angeschwemmt, sodass eine Filterschicht ausgebildet wird. Dieser Vorgang wird als die sog. Grundanschwemmung bzw. Voranschwemmung bezeichnet. Während des Filtrationsvorgangs wird dem zu filtrierenden Bier regelmäßig Filterhilfsmittel zudosiert. Dieser Vorgang wird als laufende Dosage bezeichnet. Analog zu den Filterhilfsmitteln kann das auch für die Anwendung von Stabilisierungsmitteln gelten.

Ein bekanntes Problem bei der Filtration und/oder Stabilisierung von Fluiden, insbesondere von Bier, besteht darin, dass ein ungleichmäßiger Fluss auf die Filterfläche die Anschwemmung der Anschwemmschicht, also des Filterhilfsmittels, wie z. B. von Kieselgur, an den Filterkerzen vor und während der Filtrierung unregelmäßig erfolgen kann. Insbesondere die schweren Hilfsmittelpartikel können nicht ausreichend gleichmäßig mitgenommen werden, um sich dann gleichmäßig abzulagern. Dies gilt insbesondere im oberen Bereich des Filterraums, falls das zu filtrierende Bier von unten in den Filterkessel zugeführt wird. Eine sich dadurch einstellende inhomogene Partikelgrößenverteilung führt zu einer über die Länge der Kerze inhomogenen Verteilung des Durchflusses, da die Partikelverteilung maßgeblich den Durchflusswiderstand des Filterkuchens bestimmt.

Zur Vergleichmäßigung der Anschwemmung bekannter Filterhilfsmittel sind im Stand der Technik spezielle Verfahren zur Anströmung der Filterkerzen mit Unfiltrat bekannt, welche eine Stagnation der Strömung an der früher üblichen Kopfplatte, an der die Filterkerzen aufgehängt sind, zu vermeiden suchen. Beispielsweise lehrt die EP 1 250 948 B1 die Verwendung eines Bypasses für das Unfiltrat, um eine Grundströmung von Unfiltrat im Filterkessel zu erzeugen. Auch die Verwendung eines sog. Registerablaufs für das Filtrat, wie beispielsweise aus der EP 1 243 300 B1 bekannt, ermöglicht eine Grundströmung im Filterkessel, indem Unfiltrat zwischen den Ablaufleitungen des Registerablaufs hindurchtreten kann. Die genannten Maßnahmen verbessern dabei zwar die Gleichmäßigkeit der Dicke der Anschwemmfilterschicht, können jedoch eine Inhomogenität der Anschwemmfilterschicht, insbesondere in Hinblick auf die Größe der angeschwemmten Partikel, nicht vollständig verhindern.

Zunehmend werden in jüngerer Vergangenheit alternative Filterhilfsmittel für den Einsatz in Anschwemmkerzenfiltern verwendet, um die bis dato verwendete Kieselgur zu ersetzen. Als alternative Filterhilfsmittel haben sich dabei insbesondere kompressible Filterhilfsmittel wie beispielsweise Zellstoffe bzw. Zellulosen aller Art, insbesondere Viskose, aber auch Reishülsen, Asche, o. ä bewährt. Derartige Filterhilfsmittel unterscheiden sich jedoch von der bisher verwendeten Kieselgur in Dichte und Partikelgrößenverteilung sowie im Sinkverhalten bzw. Auftrieb. Dadurch kommt es verstärkt zu Problemen bei der Anschwemmung des Filterhilfsmittels und zu besonders ungleichmäßig ausgeprägten Filterkuchen entlang der Filterkerzen.

Bei kompressiblen Filterhilfsmitteln wird zudem durch den Aufbau einer Filterschicht kaum Gegendruck aufgebaut, wie es normalerweise bei den bisher verwendeten Filterhilfsmitteln üblich ist. Dadurch wird der Fluss nicht wie üblich an Stellen mit dicker angeschwemmter Filterschicht reduziert und bei freien Flächen des Filterkörpers erhöht, sodass sich auf dem Filterkörper keine gleichmäßige Filterschicht aufbauen kann. Insbesondere die Außenfläche des Filterkörpers, die am weitesten von dem oder den Abläufen der Filterkerze für Filtrat entfernt ist, wird nur wenig mit Filterhilfsmittel belegt, da die Fließgeschwindigkeiten des Filtrats an dieser Stelle gering sind.

Aufgrund der hohen Inhomogenität, insbesondere der Dicke, von Anschwemmschichten aus kompressiblen Filterhilfsmitteln bei herkömmlichen Filterkerzen ergibt sich eine ungleichmäßige Abtrennung der Trubstoffe, da eine ungleichmäßig ausgeprägte Filterschicht eine ungleichmäßige Trenngrenze aufweist. Im Extremfall weist der Filterkuchen sogar Löcher in der Anschwemmschicht auf, sodass keine sinnvolle Filtration möglich ist, da eine ausreichende Abscheidung von Trubpartikeln nicht erreicht werden kann.

Es liegt somit der vorliegenden Erfindung die Aufgabe zugrunde, eine Filterkerze für Anschwemmfilter bereitzustellen, die eine gleichmäßige Ausbildung einer Anschwemmschicht entlang der gesamten Filterkerze für eine Vielzahl von Filterhilfsmitteln, insbesondere für kompressible Filterhilfsmittel, wie beispielsweise Zellstoffe bzw. Zellulosen aller Art, insbesondere Viskose, ermöglicht. Des Weiteren liegt der vorliegenden Erfindung die Aufgabe zugrunde, die Filtrationseigenschaften der Filterkerze zu verbessern und den Einsatz an Filterhilfsmitteln zu reduzieren. Ganz allgemein liegt der vorliegenden Erfindung die Aufgabe zugrunde, den Einsatz an Energie und Material bei der Filtrierung und/oder Stabilisierung von Fluiden, insbesondere von Bier, zu reduzieren.

**Beschreibung der Erfindung**

Die oben genannten Aufgaben werden gelöst durch eine Filterkerze für Anschwemmfilter zur Filtrierung und/oder Stabilisierung von Fluiden, insbesondere von Bier, mit einem Filterkörper, einem im Innenraum des Filterkörpers angeordneten Innenkörper und wenigstens einem zwischen dem Filterkörper und dem Innenkörper gebildeten Filtratkanal, wobei der Filterkörper und/oder der Innenkörper derart ausgebildet sind, dass einer Filtratströmung in dem Filtratkanal bei Betrieb der Filterkerze ein Strömungsprofil geben wird, das eine Vergleichmäßigung der Anschwemmung eines Filterhilfsmittels an einer äußeren Fläche des Filterkörpers bewirkt.

Filterkerzen für Anschwemmfilter mit einem Filterkörper und einem im Innenraum des Filterkörpers angeordneten Innenkörper sind im Stand der Technik an sich bekannt. Dabei kann der Filterkörper einen spiralförmig gewundenen Draht aufweisen, wobei Spalte zwischen den Drahtwindungen als Fluiddurchlässe dienen. Der Draht kann beispielsweise einen dreieckigen Querschnitt haben, und die Spaltbreite der Spalte kann in einem Bereich von ca. 30 bis 100 $\mu$m liegen. Der gewundene Draht kann entweder selbsttragend sein oder wird durch einen mit dem gewundenen Draht in Verbindung stehenden Träger gehalten.

Ein solcher Träger kann beispielsweise in Form von einem oder mehreren Abstandshaltern vorgesehen werden, die zwischen dem Filterkörper und dem Innenkörper angeordnet sind, sodass der den gewundenen Draht umfassende Filterkörper von dem Innenkörper beabstandet ist. Alternativ kann der Innenkörper mit Vorsprüngen, beispielsweise durch einen sternförmigen Querschnitt des Innenkörpers, ausgebildet sein, wobei die Drahtwindungen in Kontakt mit den Vorsprüngen des Innenkörpers angeordnet werden. Eine Vielzahl alternativer Ausbildungen ist denkbar. Entscheidend ist lediglich, dass sich zwischen der Innenfläche des Filterkörpers und der Außenfläche des Innenkörpers ein oder mehrere Filtratkanäle ausbilden, in die das Filtrat nach Durchtritt durch die Anschwemmschicht und den Filterkörper eintritt, und aus denen das Filtrat über einen oder mehrere Filtratabläufe abgezogen werden kann.

Aufgrund der großen Länge von Filterkerzen, die im Bereich von einem halben bis beispielsweise 6 Metern liegen kann, werden sowohl Filterkörper als auch Innenkörper entlang einer Längsachse elongiert ausgebildet, wobei der Filterkörper den Innenkörper entlang dieser Längsachse vollständig umschließt.

Durch Übertritt von Filtrat aus dem Unfiltratraum in den wenigstens einen zwischen dem Filterkörper und dem Innenkörper gebildeten Filtratkanal und durch Abzug des Filtrats aus dem Filtratkanal über wenigstens einen Filtratablauf entsteht in dem Filtratkanal eine Filtratströmung mit einem durch die Form des Filtratkanals, die Filtrationseigenschaften des Filterkörpers mit dem angeschwemmten Filterkuchen und das Strömungsprofil der Unfiltratströmung entlang der Filterkerze bestimmten Strömungsprofil. Bei herkömmlichen Anschwemmfiltern wurde das Problem des inhomogenen Filterkuchens stets durch Versuche, ein bestimmtes Strömungsprofil des Unfiltrats entlang der Filterkerze vorzugeben, angegangen. Bei einer herkömmlichen Filterkerze, bei der sowohl der Innenkörper als auch der Filterkörper rohrförmig mit kreisförmigem, gleichbleibendem Querschnitt konzentrisch entlang der Längsachse ausgebildet sind, steht dem zum Filtratablauf hin zunehmenden Volumenstrom an Filtrat stets der gleiche Querschnitt des Filtratkanals, beispielsweise in Form eines Ringspaltes, zur Verfügung. Aus diesem Grund nimmt bei herkömmlichen Filterkerzen die Geschwindigkeit der Filtratströmung zum Filtratablauf hin zu, wohingegen, insbesondere bei Filterkerzen mit lediglich einem Filtratablauf, ein Stagnationspunkt der Filtratströmung auf der dem Filtratablauf gegenüberliegenden Seite der Filterkerze entstehen kann. Gemäß der Bernoullischen Druckgleichung führt eine erhöhte Strömungsgeschwindigkeit jedoch zu einem reduzierten hydrostatischen Druck der hydrodynamischen Strömung, wodurch die Druckdifferenz über den Filterkörper mit Anschwemmschicht selbst bei vollständig homogener Anschwemmschicht entlang der Längsachse der Filterkerze variiert, was wiederum zu einer unregelmäßigen Anschwemmung des Filterhilfsmittels führt. Bei Anschwemmfiltern mit Filterkerzen ist zudem im Allgemeinen der Filtratablauf der Filterkerzen an deren oberen Enden vorgesehen, wobei das Unfiltrat im Allgemeinen von unten in den Filterkessel eingeführt wird, was zu einer mit zunehmender Höhe im Filterkessel tendenziell stagnierenden Unfiltratströmung führt. Somit stehen sich in dieser Situation gegenläufig zunehmende bzw. abnehmende Strömungsprofile der Filtratströmung im Inneren der Filterkerze und der Unfiltratströmung außerhalb der Filterkerze gegenüber, was die Änderung der Druckdifferenz zusätzlich verstärkt. Durch die unterschiedlichen Sogwirkungen in verschiedenen Bereichen der Filterkerze ist die Belagbildung, d. h. Kuchenausbildung, an gegenüberliegenden Enden des Filterkörpers unterschiedlich stark.

Die vorliegende Erfindung versucht, diese unterschiedlich starke Ausbildung der Anschwemmschicht zu vermeiden, indem eine hydrodynamische Optimierung der Strömung auf der Filtratseite vorgenommen wird. Dabei werden erfindungsgemäß der Filterkörper und/oder der Innenkörper derart ausgebildet, dass der Filtratströmung in dem Filtratkanal bei Betrieb der Filterkerze ein Strömungsprofil gegeben wird, das eine Vergleichmäßigung der Anschwemmung eines Filterhilfsmittels an der äußeren Fläche des Filterkörpers bewirkt. Unter einer Vergleichmäßigung der Anschwemmung des Filterhilfsmittels ist hier und im Folgenden eine Verbesserung der Gleichmäßigkeit der Dicke der Anschwemmschicht im Vergleich zur herkömmlichen Filterkerze mit konstantem Querschnitt des Filtratkanals und vollständig geschlossenen Innenkörper zu verstehen. Insbesondere können der Filterkörper und/oder der Innenkörper derart ausgebildet werden, dass die Strömungsgeschwindigkeit des Filtrats und/oder die Volumenstrombilanz über den Filterkörper und/oder die Druckverluste bei Durchtritt durch den Filterkörper bzw. die Sogwirkung der Filtratströmung auf das Unfiltrat entlang der Längsachse der Filterkerze zumindest teilweise ausgeglichen werden. In einem speziellen Fall können der Filterkörper und/oder der Innenkörper derart ausgebildet sein, dass sich ein im Wesentlichen konstantes Strömungsprofil des Filtrats im gebildeten Filtratkanal ergibt. Hierbei umfasst der Begriff "im Wesentlichen" die betriebsbedingten Schwankungen der Filtration der Filterkerze. Alternativ kann das Strömungsprofil der Filtratströmung dem Strömungsprofil des Unfiltrats entlang der Längsachse der Filterkerze angeglichen werden. Insbesondere kann durch geeignete Ausbildung des Filterkörpers und/oder des Innenkörpers ein Entstehen von Stagnationspunkten in der Filtratströmung verhindert werden.

Um das gewünschte Strömungsprofil der Filtratströmung in dem Filtratkanal zu erzielen, kann insbesondere die Form des Filterkörpers und/oder des Innenkörpers entlang der Längsachse der Filterkerze variieren, um einen für den erforderlichen Volumenfluss benötigten Querschnitt des Filtratkanals zu realisieren. Alternativ oder zusätzlich kann der Innenkörper, wie unten detailliert beschrieben, mit Aussparungen vorgesehen werden, durch die das Filtrat in den Innenraum des Innenkörpers geleitet wird, aus dem es über den wenigstens einen Filtratablauf abgezogen werden kann. Durch solche Öffnungen kann dem Filtrat im Filtratkanal die gewünschte Strömung aufgeprägt werden. Auch eine Kombination von variierendem Querschnitt und lokal vorgesehenen Öffnungen im Innenkörper ist denkbar. Der mit Öffnungen versehene Innenkörper muss zur Ausbildung eines inneren Filtratstroms zumindest teilweise hohl ausgebildet werden.

Die Begriffe "unten" und "oben" werden hier und im Folgenden im gebräuchlichen Sinn verwendet, gemäß dem ein oberer Bereich einen größeren Abstand zum Gravitationszentrum eines äußeren Gravitationsfeldes aufweist als ein unterer Bereich. Aus Gründen der Klarheit wird hier und im Folgenden stets von Filtration gesprochen, wobei damit auch stets die Stabilisierung des Fluids umfasst ist. Das gleiche gilt für den Begriff des Filterhilfsmittels, welcher analog als Stabilisierungsmittel gemeint sein kann. Auch wenn stets der Begriff Filterkerze verwendet wird, so ist damit selbstverständlich auch umfasst, dass man mit dieser Filterkerze ein Fluid, wie beispielsweise Bier, stabilisieren kann. Die Prozesse Filtration und Stabilisierung können nacheinander, d. h. in zwei getrennten Vorrichtungen erfolgen (z. B. unter Verwendung von Zellstoffen bzw. Zellulosen, insbesondere von Viskose, als Filterhilfsmittel und regenerierbarem PVPP als Stabilisierungsmittel). Hierbei können z. B. zwei Anschwemmkerzenfilter verwendet werden, welche baugleich sind. Die Prozesse Filtration und Stabilisierung können jedoch auch in einem Prozessschritt erfolgen, d. h. in einer Vorrichtung, z. B. unter gleichzeitiger Zugabe von Zellstoffen bzw. Zellulosen, insbesondere von Viskose, als Filterhilfsmittel und nicht regenerierbarem PVPP als Stabilisierungsmittel. Alternativ können auch Produkte wie Crosspure zugegeben werden, welche die Aufgabe des Filterhilfs- und Stabilisierungsmittels in einem aufweisen.

Bei dem Filtrationsvorgang befindet sich Unfiltrat im Unfiltratraum, bei dem Stabilisierungsvorgang befindet sich nicht stabilisiertes Bier im Unfiltratraum. Wenn beide Prozesse in einer Vorrichtung, sprich gleichzeitig, durchgeführt werden, so hat man unfiltriertes, nicht stabilisiertes Bier im Unfiltratraum enthalten.

Unter Stabilisierung versteht man die Absorption bestimmter Molekülfraktionen (z. B. bestimmter Proteine und Gerbstoffe / Polyphenole) an sog. Stabilisierungsmitteln. Somit werden Ausfällungen zu einem Zeitpunkt nach der Filtration verhindert, d. h. es wird beispielsweise die Glanzfeinheit von Bier innerhalb der Mindesthaltbarkeitsfrist gewährleistet.

Gemäß einer speziellen Weiterbildung kann, wie oben bereits angedeutet, der Filtratströmung in dem Filtratkanal ein Strömungsprofil der Art gegeben werden, dass in Kombination mit einem vorgegebenen Strömungsprofil einer Überströmung der äußeren Fläche des Filterkörpers mit Unfiltrat eine im Wesentlichen konstante Druckdifferenz über den Filterkörper entlang der Filterkerze vorliegt. Das Strömungsprofil der Überströmung der äußeren Fläche des Filterkörpers mit Unfiltrat ergibt sich dabei im Allgemeinen in Abhängigkeit von der Art, in der Unfiltrat in den Filterkessel eingebracht wird, den Filtrationseigenschaften der Filterkerzen bzw. des gesamten Anschwemmfilters, sowie in Abhängigkeit von der Ausbildung des Filterkessels. Beispielsweise führt das Vorsehen einer Kopfplatte, die wie bei klassischen Anschwemmfiltern den Filterkessel in einen Unfiltratraum und einen Filtratraum teilt, zu einer Stagnation der Unfiltratströmung an der Kopfplatte. Bei Vorsehen eines Registerablaufs, wie er beispielsweise in der EP 1 243 300 B1 beschrieben wird, kann das Unfiltrat zwischen den Leitungen des Registerablaufs hindurchtreten, sodass eine Stagnation der Unfiltratströmung am Registerablauf verhindert werden kann. Ebenso führt das Vorsehen einer Bypass-Leitung für das Unfiltrat, so wie es beispielsweise in der EP 1 250 948 B1 beschrieben wurde, zur Überlagerung einer endlichen Grundströmung des Unfiltrats im Filterkessel, welche wiederum eine Stagnation der Unfiltratströmung am Kopfende der Filterkerzen verhindert. In allen Fällen, bei denen Unfiltrat von unten in den Filterkessel eingeführt wird, nimmt jedoch die Strömungsgeschwindigkeit des Unfiltrats mit zunehmender Höhe über dem Boden des Unfiltratraums ab, sodass das Strömungsprofil einer Überströmung der äußeren Fläche des Filterkörpers mit Unfiltrat einer entlang der Längsachse der Filterkerzen nach oben hin abnehmende Strömungsgeschwindigkeit aufweist.

Gemäß dieser Weiterbildung können nun der Filterkörper und/oder der Innenkörper derart ausgebildet sein, dass das Strömungsprofil der Filtratströmung in dem Filtratkanal im Wesentlichen, d. h. bis auf Toleranzen beim Betrieb der Filterkerze, dem vorgegebenen Strömungsprofil der Überströmung der äußeren Fläche des Filterkörpers mit Unfiltrat entspricht oder sich zumindest qualitativ entsprechend dem Strömungsprofil der Überströmung mit Unfiltrat verhält. Insbesondere kann durch entsprechende Ausbildung des Filterkörpers und/oder des Innenkörpers eine Filtratströmung mit einem Strömungsprofil erzielt werden, bei welcher die Geschwindigkeit der Filtratströmung in dem Filtratkanal entlang der Längsachse der Filterkerze nach oben hin abnimmt. Gemäß der Bernoulligleichung führt eine solche Angleichung der Strömungsprofile im Filtratkanal und im Außenbereich des Filterkörpers zu einer Reduktion in der Variation der Druckdifferenz über den Filterkörper entlang der Filterkerze. Im Idealfall können Filterkörper und/oder Innenkörper derart ausgebildet sein, dass sich eine im Wesentlichen konstante Druckdifferenz über den Filterkörper (und die Anschwemmschicht) entlang der Filterkerze ergibt, wodurch ein gleichmäßiges Anschwemmen von Filterhilfsmitteln, insbesondere Viskose, erzielt werden kann. Auf diese Weise kann eine gleichmäßige Dicke der Anschwemmschicht selbst bei kompressiblen Filterhilfsmitteln entlang der gesamten Länge der Filterkerze garantiert werden, sodass insgesamt weniger Filterhilfsmittel eingesetzt werden muss, um eine minimale Schichtdicke der Anschwemmschicht zu garantieren. Die erfindungsgemäße Filterkerze führt daher zu einer Einsparung an Filterhilfsmitteln und dadurch zu einer verbesserten Filtration und Qualität des abgezogenen Filtrats. Gemäß dieser Weiterbildung ist eine im Wesentlichen konstante Druckdifferenz als eine Druckdifferenz zu verstehen, deren Schwankungen entlang der gesamten Filterkerze im Bereich von weniger als 10 % bevorzugt weniger als 5 % der mittleren Druckdifferenz liegt.

Gemäß einer weiteren Weiterbildung kann die Filterkerze mindestens einen Filtratablauf aufweisen, wobei sich ein Querschnitt des Filtratkanals zu dem Filtratablauf hin erweitert. Wie oben bereits beschrieben würde ein konstanter Querschnitt des Filtratkanals entlang der Filterkerze aufgrund des entlang der Filterkerze zum Filtratablauf hin zunehmenden zu transportierenden Volumen an Filtrat zu einer zum Filtratablauf hin zunehmenden Strömungsgeschwindigkeit des Filtrats führen. Ein sich zu dem Filtratablauf hin erweiternder Querschnitt des Filtratkanals kompensiert diese Zunahme des Volumenstroms, sodass zumindest eine Reduktion der Zunahme der Strömungsgeschwindigkeit zum Filtratablauf hin erreicht werden kann. Wie oben erwähnt, kann im idealen Fall ein konstantes Strömungsprofil des Filtrats bzw. ein nach oben hin abnehmendes Strömungsprofil des Filtrats erzielt werden.

Falls die Filterkerze mit nur einem Filtratablauf ausgebildet ist, kann eine Anordnung des Filtratablaufs am Fußende, d. h. am unteren Ende der Filterkerze vorteilhaft sein, da in diesem Fall bereits aufgrund der Anordnung des Filtratablaufs eine Zunahme der Strömungsgeschwindigkeit der Filtratströmung von oben nach unten entlang der Längsachse der Filterkerze und somit umgekehrt eine Abnahme der Filtratströmung von Fußende zum Kopfende der Filterkerze hin entsteht, welche in etwa dem Verhalten der Unfiltratströmung entspricht. Die Richtung der Strömung ist hierbei aufgrund des Quadrats der Geschwindigkeit im hydrodynamischen Druck der Bernoulligleichung unerheblich. Dabei kann der Querschnitt des Filtratkanals zu dem Filtratablauf hin erweitert werden, um das Strömungsprofil der Filtratströmung an das Strömungsprofil der Überströmung mit Unfiltrat anzupassen.

Des Weiteren kann die Filterkerze sowohl über einen Filtratablauf am oberen Ende als auch über einen Filtratablauf am unteren Ende verfügen, wobei der Querschnitt des Filtratkanals gemäß dieser Weiterbildung zu den Filtratabläufen hin zunimmt und somit an einer in Abhängigkeit von dem Strömungsprofil der Überströmung mit Unfiltrat gewählten Stelle der Filterkerze zwischen den beiden Filtratabläufen ein Minimum aufweist. Wie stark sich der Querschnitt des Filtratkanals zu dem jeweiligen Filtratablauf hin erweitert, hängt von dem gewünschten Strömungsprofil der Filtratströmung ab.

Gemäß einer speziellen Weiterbildung kann der Innenkörper derart ausgebildet sein, dass sich sein Querschnitt zu dem Filtratablauf hin verjüngt und/oder der Filterkörper kann derart ausgebildet sein, dass sich sein Querschnitt zu dem Filtratablauf hin erweitert. In allen drei Fällen nimmt die Differenz zwischen dem Querschnitt des Filterkörpers und dem Querschnitt des Innenkörpers, welcher im Wesentlichen den Querschnitt des gebildeten Filtratkanals bestimmt, zu dem Filtratablauf hin zu. Bei Vorsehen zweier Filtratabläufe kann sich wie oben beschrieben der Querschnitt des Innenkörpers von einem maximalen Querschnitt zu beiden Filtratabläufen hin verjüngen und/oder sich der Querschnitt des Filterkörpers von einem minimalen Querschnitt zu beiden Filtratabläufen hin erweitern. Dabei können der Filterkörper und der Innenkörper insbesondere konzentrisch angeordnet sein. Es versteht sich, dass die genaue Form des Innenkörpers und/oder des Filterkörpers, und damit des Filtratkanals mittels hydrodynamischer Berechnungen derart bestimmt werden kann, dass sich ein gewünschtes Strömungsprofil der Filtratströmung bei einem vorgegebenen Strömungsprofil der Überströmung mit Unfiltrat ergibt.

Gemäß einer weiteren Weiterbildung kann der Innenkörper zumindest teilweise als ein sich zu dem Filtratablauf hin verjüngender elliptischer Paraboloid oder ein sich zu dem Filtratablauf hin verjüngender Konus ausgebildet sein, und/oder der Filterkörper kann zumindest teilweise als sich zu dem Filtratablauf hin erweiternder Konus ausgebildet sein. Mit einer paraboloiden bzw. kegelförmigen Ausbildung des Innenkörpers und/oder Filterkörpers kann die zuvor beschriebene Erweiterung des Querschnitts des Filtratkanals zu dem Filtratablauf hin erreicht werden, wodurch zumindest eine Reduzierung der Zunahme der Filtratströmung zum Filtratablauf hin erreicht werden kann. Zudem kann durch Ausbildung des Innenkörpers und/oder des Filterkörpers als Konus, welcher den jeweiligen anderen Körper an der Stelle größter Entfernung von dem Filtratablauf berührt, eine vollständige Stagnation der Filtratströmung vermieden werden. Durch Vorsehen eines Innenkörpers mit konvex gekrümmter Oberfläche in Form eines umgekehrten elliptischen Paraboloids bzw. eines Filterkörpers in Form eines sich zu dem Filtratablauf hin erweiternden Konus kann eine konstante Strömungsgeschwindigkeit des Filtrats im Filtratkanal erzielt werden (siehe weiter unten). Eine zum Filtratablauf hin abnehmende Strömungsgeschwindigkeit der Filtratströmung kann durch entsprechend stärkere Krümmung der Oberfläche des Innenkörpers bzw. durch eine konkav gekrümmte Oberfläche des Filterkörpers erreicht werden. Dadurch kann das Strömungsprofil der Filtratströmung an das Strömungsprofil der Überströmung mit Unfiltrat angepasst werden, wodurch sich eine im Wesentlichen konstante Druckdifferenz über den Filterkörper mit Anschwemmschicht entlang der Längsachse der Filterkerze ergibt.

In den oben beschriebenen Weiterbildungen können bei der Ausbildung des Filterkörpers und/oder des Innenkörpers die unterschiedlichen spezifischen Gewichte der Partikel des Filterhilfsmittels berücksichtigt werden. Beispielsweise kann ein Filtratablauf am unteren Ende der Filterkerze vorgesehen werden, um die unterschiedlichen Auftriebe der Partikel des Filterhilfsmittels im Unfiltrat auszugleichen. Unabhängig von der Anordnung des oder der Filtratabläufe kann positiv auf die Sinkgeschwindigkeit der Partikel eingewirkt werden, indem die Kräftebilanz hinsichtlich des Auftriebs bzw. des Absinkens der Partikel des Filterhilfsmittels durch ein entsprechendes Strömungsprofil der Filtratströmung und die sich daraus ergebenden Druckdifferenzen ausgeglichen wird.

Gemäß einer alternativen Weiterbildung kann der Innenkörper im Wesentlichen rohrförmig ausgebildet sein und wenigstens einen Filtratablauf aufweisen, wobei der Innenkörper wenigstens an zwei Stellen entlang seiner Längsachse umfänglich angeordnete Öffnungen aufweist, die derart ausgebildet sind, dass Filtrat von dem Filtratkanal in einen Innenraum des Innenkörpers eintreten kann. Gemäß dieser Weiterbildung ist der Innenkörper somit zumindest teilweise als Hohlkörper ausgebildet, wobei der Begriff "im Wesentlichen rohrförmig" hier dahingehend zu verstehen ist, dass der Innenkörper einen entlang seiner Längsachse umfänglich geschlossenen Mantel aufweist, dessen Querschnitt durchaus entlang der Längsachse variieren kann. Insbesondere ist eine Ausbildung des Innenkörpers gemäß den oben beschriebenen Weiterbildungen als im Wesentlichen hohler Konus denkbar. Auch kann der Innenkörper zumindest teilweise derart ausgebildet ist, dass sich sein Querschnitt zu dem Filtratablauf hin erweitert, um ein gleichmäßiges Strömungsprofil der Filtratströmung im Innenraum des Innenkörpers zu erzielen. Hier bedeutet im Wesentlichen hohl, dass der Innenkörper einen Hohlraum aufweist, welcher die entlang seiner Längsachse angeordneten Öffnungen mit einem oder mehreren Filtratabläufen verbindet, über die das in den Innenraum des Innenkörpers eingetretene Filtrat abgezogen werden kann. Wie bereits zuvor kann die Filterkerze dabei mit lediglich einem Filtratablauf, beispielsweise am oberen oder am unteren Ende der Filterkerze, ausgebildet sein oder aber mit zwei Filtratabläufen, d. h. sowohl am oberen als auch am unteren Ende der Filterkerze. Anders als zuvor erfolgt das Abziehen des Filtrats jedoch nicht unmittelbar aus dem Filtratkanal, sondern indirekt aus dem von dem Hohlraum gebildeten Innenraum des Innenkörpers. Dazu kann der Filtratkanal insbesondere an beiden Enden der Filterkerze verschlossen sein.

Gemäß dieser Weiterbildung weist der ansonsten geschlossene Mantel des Innenkörpers an wenigstens zwei Stellen entlang seiner Längsachse umfänglich angeordnete Öffnungen auf. Dabei können diese Öffnungen beispielsweise lochförmig oder schlitzförmig ausgebildet sein. Die Öffnungen können entlang des Umfangs des Innenkörpers in regelmäßigen Abständen angeordnet sein oder aber unregelmäßig verteilt sein. Entscheidend ist, dass Öffnungen, durch die das Filtrat aus dem wenigstens einen Filtratkanal in dem Innenraum des Innenkörpers eintreten kann, lediglich im Bereich von zwei oder mehr vorgegebenen Stellen entlang der Längsachse des Innenkörpers angeordnet sind. Somit bildet sich in dem Filtratkanal ein Strömungsprofil aus, mit dem durch den Filterkörper hindurchtretendes Filtrat von den Stellen, an denen es durch den Filterkörper hindurchtritt, zu den Öffnungen im Mantel des Innenkörpers strömt.

Gemäß einer speziellen Weiterbildung können die Öffnungen derart an bestimmten Stellen entlang der Längsachse des Innenkörpers vorgesehen werden, dass eine Stagnation der Filtratströmung im Filtratkanal aufgrund eines einseitigen Abzugs des Filtrats aus der Filterkerze vermieden werden kann. Beispielsweise können Öffnungen sowohl auf der Seite des Filtratablaufs als auch am gegenüberliegenden Ende der Filterkerze vorgesehen werden. Durch Vorsehen von Öffnungen am gegenüberliegenden Ende der Filterkerze wird der dort ansonsten vorliegende Stagnationspunkt der Filtratströmung aufgehoben, da nun das Filtrat durch die Öffnungen in den Innenraum des Innenkörpers eintreten kann.

Gemäß einer speziellen Weiterbildung können eine Anzahl und/oder Größe der Öffnungen derart entlang der Längsachse des Innenkörpers variieren, dass das die Anschwemmung vergleichmäßigende Strömungsprofil in dem Filtratkanal gebildet wird. Entscheidend für die Menge des durch die an einer Stelle des Innenkörpers umfänglich angeordneten Öffnungen eintretenden Filtrats ist insbesondere die Gesamtfläche der Öffnungen. Durch Variation der Anzahl und/oder Größe und/oder Form der Öffnungen kann somit die Menge des durch die Öffnungen in den Innenraum eintretenden Filtrats gezielt beeinflusst werden. Als Öffnungen sind beispielsweise Schlitze, Ellipsen, Kreise, Rechtecke, usw. denkbar. Indem an den wenigstens zwei Stellen des Mantels des Innenkörpers entsprechend viele bzw. große Öffnungen vorgesehen werden, kann der Ablauf von Filtrat aus dem Filtratkanal in den Innenraum des Innenkörpers derart gesteuert werden, dass sich das Strömungsprofil im Filtratkanal an das Strömungsprofil der Überströmung durch Unfiltrat wie oben beschrieben annähert. Auf diese Weise kann eine Vergleichmäßigung des Filterkuchens auf der Außenfläche des Filterkörpers erzielt werden.

Gemäß einer weiteren Weiterbildung kann die Gesamtfläche der Öffnungen an einer Stelle entlang der Längsachse des Innenkörpers umso größer sein, je weiter die Stelle von dem wenigstens einen Filtratablauf entfernt ist. Wie bereits mehrfach diskutiert, bilden sich im Filtratkanal an den besonders weit von dem Filtratablauf entfernten Stellen Stagnationspunkte im Strömungsprofil der Filtrationsströmung aus, da das Filtrat in dem Kanal zu dem Filtratablauf hinströmt. Um solche Stagnationspunkte der Filtratströmung wirksam zu vermeiden, kann gemäß dieser Weiterbildung die Gesamtfläche der Öffnungen an einer Stelle entlang der Längsachse des Innenkörpers umso größer ausgebildet werden, je weiter die Stelle von dem wenigstens einen Filtratablauf entfernt ist. Bei Vorsehen von zwei Filtratabläufen kann die kleinere der beiden Entfernungen der Öffnungen von den beiden Filtratabläufen zur Bestimmung der Gesamtfläche der Öffnungen herangezogen werden. Durch Vorsehen von Öffnungen mit einer größeren Gesamtfläche an der oder den Stellen, die besonders weit von dem oder den Filtratabläufen entfernt sind, tritt an diesen Stellen besonders viel Filtrat in den Innenraum des Innenkörpers ein, wodurch eine Stagnation der Filtratströmung an diesen Stellen vermieden werden kann. Beispielsweise kann die Gesamtfläche von Öffnungen an einem dem einzigen Filtratablauf einer speziellen Weiterbildung gegenüberliegenden Ende der Filterkerze größer als die Gesamtfläche der Öffnungen an der Seite des Filtratablaufs sein. Dadurch wird ein Stagnationspunkt an dem dem Filtratablauf gegenüberliegenden Ende der Filterkerze aufgehoben. Gemäß dieser speziellen Weiterbildung kann der Innenkörper somit auch nur einen Filtratablauf aufweisen, wobei die Gesamtfläche der Öffnungen an der dem Filtratablauf fernen Stelle größer als die Gesamtfläche der Öffnungen an der dem Filtratablauf nahen Stelle ist.

Gemäß einer weiteren Weiterbildung kann der Innenkörper zu seinen beiden Enden hin Öffnungen und weiterhin im Wesentlichen mittig angeordneten Öffnungen aufweisen. Dabei bedeutet im Wesentlichen mittig angeordnet, dass die Öffnungen im Bereich der mittleren 20 % der Ausdehnung des Filterkörpers entlang der Längsachse der Filterkerze, bevorzugt, im Bereich der mittleren 10 % dieser Ausdehnung, an einer vorgegebenen Stelle angeordnet sind. Eine solche zusätzliche Anordnung von Öffnungen in einem mittleren Bereich des Innenkörpers kann bei besonders langen Filterkerzen, beispielsweise länger als 2 m, aber auch bei kürzeren Filterkerzen ab 0,5 m, von Vorteil sein. Die Gesamtfläche der mittig angeordneten Öffnungen kann dabei gemäß den oben beschriebenen Regeln gewählt werden. Auch bei einem Innenkörper, der an seinen beiden Enden Filtratabläufe aufweist, kann ein Vorsehen von im Wesentlichen mittig angeordneten Öffnungen vorteilhaft sein, um die Ausbildung eines Stagnationspunkts zwischen den beiden Filtratabläufen in der Filtratströmung im Filtratkanal zu vermeiden. Die Öffnungen können in den hier beschriebenen Weiterbildungen stets so angeordnet sein, dass sie einer aktiven Filterfläche des Filterkörpers gegenüber liegen. Zusätzlich zu den mittig angeordneten Öffnungen sind auch Innenkörper denkbar, die über ihre Länge verteilt Öffnungen an einer Vielzahl von Stellen aufweisen, wobei die Abstände und Anzahl und/oder Größe der Öffnungen derart gewählt werden, dass das gewünschte Strömungsprofil der Filtratströmung erzeugt wird. Beispielsweise können umfänglich angeordnete Öffnungen etwa alle 20cm am Innenkörper vorgesehen sein.

Gemäß einer weiteren Weiterbildung kann der Innenkörper weiterhin ein oder mehrere verjüngende Elemente und/oder unterschiedliche Querschnitte in seinem Innenraum aufweisen, die derart ausgebildet sind, dass sie einen Querschnitt des Innenkörpers im Bereich der Öffnungen oder unmittelbar stromaufwärts der Öffnungen verjüngen. Eine unmittelbar stromaufwärts gelegene Anordnung dieser verjüngenden Elemente ist hierbei im Hinblick auf die jeweilige lokale Strömungsrichtung des Filtrats im Innenraum des Innenkörpers zu verstehen. Durch Vorsehen der verjüngenden Elemente kann der Querschnitt des Innenkörpers im Bereich der Öffnungen bzw. unmittelbar stromaufwärts der Öffnung reduziert werden, sodass der hydrostatische Druck der Filtratströmung in diesem Bereich reduziert wird. Durch den so erzeugten Widerstand in der Filtratströmung im Innenraum des Innenkörpers kann ein Venturieffekt erzielt werden, wodurch eine Sogwirkung an den entsprechenden Öffnungen bewirkt wird, durch welche Filtrat aus dem Filtratkanal durch die Öffnungen in den Innenraum gesaugt wird. Aufgrund der Trägheit des Filtrats ist dieser Effekt auch bei unmittelbar stromaufwärts von den Öffnungen vorgesehenen verjüngenden Elementen vorhanden. Die verjüngenden Elemente unterstützen somit den Transport von Filtrat aus dem Filtratkanal in den Innenraum des Innenkörpers an den dafür vorgesehenen Stellen. Durch entsprechende Dimensionierung der verjüngenden Elemente bzw. des Querschnitts des Innenkörpers lässt sich damit das Strömungsprofil des Filtrats im Filtratkanal wie gewünscht beeinflussen.

Die oben genannten Aufgaben werden auch durch einen Anschwemmfilter zur Filtrierung und/oder Stabilisierung von Fluiden, insbesondere von Bier, gelöst, der eine Vielzahl von Filterkerzen gemäß den zuvor beschriebenen Weiterbildungen aufweist. Die Vielzahl der Filterkerzen kann beispielsweise in einer Matrix angeordnet sein.

Gemäß einer Weiterbildung kann der Anschwemmfilter weiterhin einen Filterkessel mit mindestens einem Zulauf für Unfiltrat, einem Unfiltratraum und mindestens einem Ablauf für das Filtrat aufweisen, wobei die Vielzahl der Filterkerzen in dem Unfiltratraum angeordnet ist. Filterkessel für Anschwemmfilter sind im Stand der Technik wohl bekannt und werden daher hier nicht mehr erläutert. Im Allgemeinen befindet sich der Zulauf für das Unfiltrat dabei am unteren Ende des Filterkessels, wobei das eingebrachte Unfiltrat in einer aufsteigenden Strömung über die Außenflächen der Filterkörper der Vielzahl der Filterkerzen strömt. Bei einem Filtrationsvorgang wird der Unfiltratraum somit mit Unfiltrat gefüllt, wobei bei einem Stabilisierungsvorgang dieser Unfiltratraum beispielsweise mit nicht stabilisiertem Bier gefüllt wird. Der Anschwemmfilter kann einen von dem Unfiltratraum durch eine Kopfplatte, in der die Filterkerzen münden, getrennten Filtratraum umfassen, in den das Filtrat aus den Filterkerzen eintritt. Alternativ kann der Anschwemmfilter einen sog. Registerablauf umfassen, wie er beispielsweise aus der EP 1 243 300 B1 bekannt ist. In diesem Fall kann der Anschwemmfilter eine Mehrzahl an Rohrleitungen und ein zusätzliches Rohrsystem umfassen, wobei jede Filterkerze an ihrem Kopfende an einer der Mehrzahl der Rohrleitungen angeschlossen ist, sodass das Filtrat aus der Filterkerze über einen oder mehrere Filtratabläufe der Filterkerze, insbesondere im Kopfstück der Filterkerze, in die ihr zugeordnete Rohrleitung geliefert werden kann. Hierbei sind die Rohrleitungen mit dem zusätzlichen Rohrsystem verbunden, sodass sie in einer oder mehreren Gruppen (Registersammelrohren) zusammengefasst werden können, sodass das Filtrat jeder Gruppe von Rohrleitungen in einen nur dieser Gruppe zugeordneten Filtratablauf geliefert werden kann. Das Filtrat einer Gruppe von Rohrleitungen wird also zusammengeführt und über einen Filtratablauf bereitgestellt. Bei Vorsehen eines Registerablaufs ist insbesondere kein separater Filtratraum in Form eines Kopfraumes des Filterkessels vorgesehen.

Gemäß einer weiteren Weiterbildung kann der Anschwemmfilter weiterhin wenigstens einen Ablauf für das Unfiltrat umfassen, wobei der Zulauf für das Unfiltrat in einem Bereich unterhalb der Filterkerzen angeordnet ist und der Ablauf für das Unfiltrat am oder über dem oberen Ende der Filterkerzen angeordnet ist. Ein solcher Ablauf kann insbesondere in Form einer Bypass-Leitung zum Ausleiten des Unfiltrats aus dem Unfiltratraum ausgebildet sein, so wie sie beispielsweise aus der EP 1 250 948 B1 bekannt ist. Über die Bypass-Leitung kann das aus dem Filterkessel abgezogene Unfiltrat erneut dem Zulauf für das Unfiltrat zugeführt werden.

Durch die zwei Abläufe - einmal für Filtrat durch die Filterkerzen und andererseits für Unfiltrat direkt aus dem Unfiltratraum heraus - können somit zwei Teilströme geschaffen werden, nämlich ein Filtratstrom und ein Unfiltratstrom, wie es beispielsweise im Twin-Flow-System der Anmelderin verwendet wird. Dabei können der Filtratstrom und der Unfiltratstrom unabhängig voneinander geregelt werden. Bei Anordnung des Zulaufs für das Unfiltrat in einem Bereich unterhalb der Filterkerzen und Anordnung des Ablaufs für das Unfiltrat am oder über dem oberen Ende der Filterkerzen kann gemäß der vorliegenden Weiterbildung selbst bei geringer Filterleistung oder bei schwer filtrierbaren Bieren ein Unfiltratstrom im Unfiltratraum ausgebildet werden, der zu einer Grundströmung von Unfiltrat entlang der Außenfläche der Filterkerzen führt. Eine solche Grundströmung vermeidet dabei die mit der Aufteilung des Filterkessels in einen Unfiltratraum und einen Filtratraum an einer als Trennwand verwendeten Kopfplatte entstehende Stagnation der Unfiltratströmung.

Gemäß einer weiteren Weiterbildung kann der Anschwemmfilter zudem eine Rückführleitung aufweisen, die derart ausgebildet ist, dass Filtrat von mindestens einem Filtratablauf des Anschwemmfilters zu einem Innenraum der Filterkerzen zurückgeführt werden kann. Dazu kann die Rückführleitung beispielsweise zwischen einem ersten Registerablauf am oberen Ende der Filterkerzen und einem zweiten Registerablauf am unteren Ende der Filterkerzen vorgesehen sein, wobei die Registerabläufe über an entsprechenden Abzugstellen für Filtrat der Filterkerzen mit dem Innenraum des Filterkörpers, und insbesondere mit dem oder den Filtratkanälen, der Filterkerzen verbunden sind. Durch Rückführen eines Teils des aus dem Filtratablauf abgezogenen Filtrats kann somit eine Grundströmung an Filtrat in den Filterkerzen erzeugt werden, die einer Grundströmung der Überströmung mit Unfiltrat im Filterkessel angeglichen werden kann. Dadurch reduziert sich der relative Unterschied der Strömungsprofile von Filtrat und Unfiltrat, wodurch die Variation der Druckdifferenz über die Anschwemmschicht und den Filterköper entlang der Filterkerzen reduziert wird. Als Ergebnis ergibt sich eine Vergleichmäßigung der Anschwemmschicht.

Eine spezielle Weiterbildung sieht einen hohlförmigen Innenkörper als Verlängerung der Rückführleitung in den Innenraum der Filterkerzen vor, wobei dieser Innenkörper an dem dem Filtrateinlass durch die Rückführleitung gegenüberliegenden Ende entweder offen ist oder an diesem Ende umfänglich angeordnete Öffnungen in seinem Mantel aufweist, durch welche das rückgeführte Filtrat in den Innenraum der Filterkerze eintreten kann. Bei Kombination mit dem oben erwähnten Innenkörper mit einer Vielzahl von Öffnungen in der Mantelfläche, wird dieser zusätzliche hohlförmige Innenkörper innerhalb jenes zuvor beschriebenen Innenkörpers angeordnet. Auch Innenkörper mit variierendem Querschnitt lassen sich hohlförmig zum Rückführen von Filtrat ausbilden. Ebenso kann der Filterkörper die oben beschriebene Konusform annehmen. Bei der Berechnung des Querschnitts der Filtratkanäle muss dann die Grundströmung aufgrund des Umwälzens eines Teils des Filtrats in der Filterkerze berücksichtigt werden.

Die oben genannten Aufgaben werden auch durch die Verwendung einer oder mehrerer Filterkerzen gemäß den oben beschriebenen Weiterbildungen zur Filtrierung und/oder Stabilisierung von Fluiden, insbesondere von Bier, mit einem oder mehreren kompressiblen Filterhilfsmitteln, insbesondere mit Viskose, gelöst. Anders als bei der üblich verwendeten Kieselgur wird bei kompressiblen Filterhilfsmitteln wie Zellulose oder Viskose durch den Aufbau einer Filterschicht kaum Gegendruck aufgebaut. Dadurch wird die Dicke der angeschwemmten Anschwemmschicht bei Verwendung solcher kompressibler Filterhilfsmittel bei bisher bekannten Filterkerzen besonders unregelmäßig, wodurch eine wirksame Filtration nicht gegeben ist. Bei Verwendung der oben beschriebenen Filterkerzen lassen sich jedoch auch problemlos kompressible Filterhilfsmittel zur Filtrierung und/oder Stabilisierung von Fluiden, insbesondere von Bier, einsetzen.

Der Prozess der Filtrierung und/oder Stabilisierung erfolgt dabei wie im Stand der Technik an sich bekannt und wird daher hier nicht im Einzelnen erläutert. In einem Voranschwemmvorgang, bei dem in den Unfiltratraum ein Vormedium, beispielsweise aus Wasser und Filterhilfsmittel, eingeleitet wird, wird eine gleichmäßige Anschwemmschicht durch Anlagerung der kompressiblen Filterhilfsmittel an der Außenfläche der oben beschriebenen Filterkerzen erzeugt. Anschließend wird das Vormedium durch das zu filtrierende Unfiltrat verdrängt, sodass der eigentliche Filtrationsvorgang einsetzt. Während des Filtrationsprozesses wird dabei der Großteil des Unfiltrats durch die Filterkerzen geleitet, während nur ein kleiner Unfiltratstrom aufrecht erhalten wird, der für eine gleichmäßige Strömung des Unfiltrats im Unfiltratraum sorgt. Nach dem Filtrationsvorgang wird der Filterinhalt durch ein Nachmedium ausgeschoben, um eine Reinigung des Anschwemmfilters, beispielsweise durch Rückspülen, zu ermöglichen.

Die oben beschriebenen Filterkerzen ermöglichen eine Vergleichmäßigung der Anschwemmschicht bzw. des Filterkuchens auf der Außenfläche der Filterkerzen bei der Filtration und/oder Stabilisierung von Fluiden sowohl im Hinblick auf die Dicke der Anschwemmschicht als auch auf die Homogenisierung der Partikelgrößen in der Anschwemmschicht. Aufgrund der speziellen Ausbildung der Filterkerzen können diese auch mit kompressiblen Filterhilfsmitteln, beispielsweise mit Viskose, eingesetzt werden, was mit bisher bekannten Filterkerzen nicht zuverlässig möglich war. Da durch die spezielle Ausbildung der Filterkerze eine homogene Anschwemmschicht entlang der gesamten Länge der Filterkerze erreicht werden kann, kann der Anschwemmfilter mit einer geringeren mittleren Dicke der Anschwemmschicht im Vergleich zu herkömmlichen Anschwemmfiltern bei Verwendung desselben Filterhilfsmittels betrieben werden. Dadurch kann einerseits Filterhilfsmittel eingespart werden und andererseits eine höhere Standzeit des Anschwemmfilters erzielt werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

Figur 1 zeigt einen schematischen Längsschnitt durch einen herkömmlichen Anschwemmfilter.

Figur 2 zeigt einen schematischen Längsschnitt durch eine herkömmliche Filterkerze.

Figur 2a zeigt einen Schnitt entlang der Linie A-A der Figur 2.

Figur 3 zeigt einen schematischen Längsschnitt einer beispielhaften Ausführung einer Filterkerze mit sich verjüngendem Innenkörper gemäß der vorliegenden Erfindung.

Figur 4 zeigt einen Längsschnitt einer alternativen beispielhaften Ausführung einer Filterkerze mit konusförmigem Filterkörper gemäß der vorliegenden Erfindung.

Figur 5 zeigt einen Längsschnitt einer beispielhaften Ausführung einer Filterkerze mit Öffnungen im Mantel eines hohlen Innenkörpers gemäß der vorliegenden Erfindung.

Fig. 6 zeigt alternative Ausführungen zu Filterkerzen mit optimierter Filtratströmung gemäß der vorliegenden Erfindung.

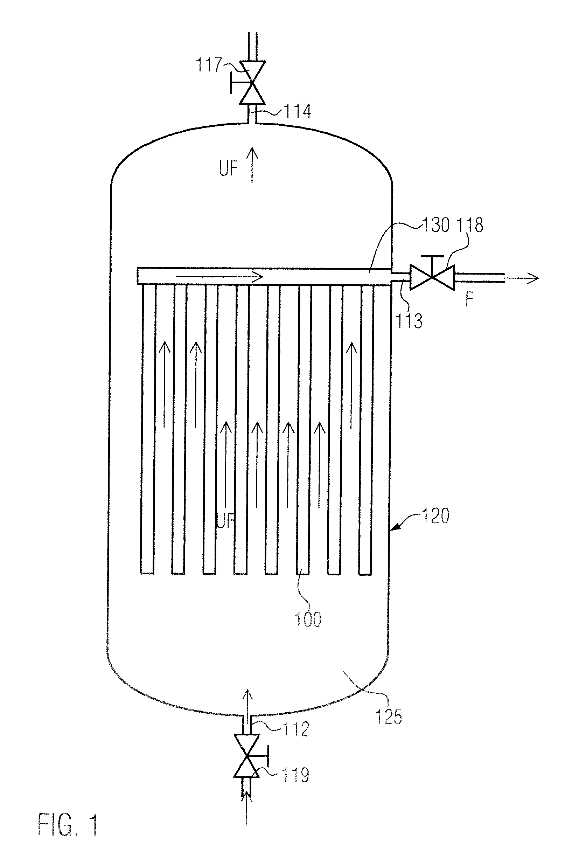

Figur 1 zeigt einen schematischen Längsschnitt durch einen herkömmlichen Anschwemmfilter. Der Anschwemmfilter umfasst einen Filterkessel 120 mit einem durchgehenden Unfiltratraum 125, einem Zulauf 112 für Unfiltrat und einem Ablauf 114 für Unfiltrat, wie er an sich im Stand der Technik bekannt ist. Eine Vielzahl von Filterkerzen 100 sind in der dargestellten Ausführung des Anschwemmfilters in Form einer Matrix hängend an einem Registerablauf 130 für das Filtrat befestigt. Dabei werden die Filterkerzenabläufe über Rohrsysteme zusammengefasst und können separat abgeführt werden. Der Registerablauf 130 stellt somit einen Ablauf 113 für das Filtrat F dar, wobei die Ablaufmenge über eine Regeleinrichtung, wie z. B. das Regelventil 118 eingestellt werden kann.

Die Zufuhr von Unfiltrat über den Zulauf 112 kann mittels eines Regelrventils 119 eingestellt werden. Alternativ kann es sich bei dem Ventil 119 lediglich um ein Absperrventil handeln. Die Regelung der Zufuhr des Unfiltrats erfolgt dann mittels einer frequenzgesteuerten Pumpe (in Figur 1 nicht dargestellt) Im Allgemeinen tritt das Unfiltrat von unten in den Filterkessel 120 ein, wobei es das zudosierte Filterhilfsmittel und/oder Stabilisierungsmittel mit sich führt. Wie durch die Pfeile in der Figur 1 angedeutet, steigt das Unfiltrat UF vom Zulauf 112 her im Filterkessel 120 auf, wobei es eine Außenfläche der Filterkerzen 100 überströmt. In der hier dargestellten Weiterbildung mit einem Registerablauf 130 kann das nicht in die Filterkerzen eintretende Unfiltrat durch Öffnungen zwischen den Rohrleitungen des Registerablaufs und/oder seitlich am Registerablauf vorbei strömen, wodurch eine nach oben gerichtete Grundströmung entlang der gesamten Länge der Filterkerzen 100 erzeugt wird. Um ein Aufstauen des überschüssigen Unfiltrats im oberen Bereich des Filterkessels 120 zu vermeiden, wird über den Ablauf 114 und eine damit verbundene Bypassleitung (nicht gezeigt) Unfiltrat aus dem oberen Bereich des Filterkessels abgezogen. Bevorzugt ist dabei die Zufuhr 112 für Unfiltrat unterhalb des unteren Endes der Filterkerzen angeordnet, während der Ablauf 114 für Unfiltrat zur Bypassleitung hin oberhalb des oberen Endes der Filterkerzen am Filterkessel 120 angeordnet ist. Das Abziehen von Unfiltrat über die Ablaufleitung 114 kann mittels des Stellventils 117 geregelt werden, sodass sich eine wohl definierte, aufwärts gerichtete Grundströmung an Unfiltrat im Inneren des Unfiltratraums einstellt. Auf diese Weise wird bei herkömmlichen Anschwemmfiltern die für eine als Trennebene dienende Kopfplatte übliche Stagnation des aufwärts gerichteten Unfiltratstroms vermieden. Das über den Ablauf 114 und die damit verbundene Bypassleitung abgezogene Unfiltrat kann dem Filterkessel 120 über den Zulauf 112 erneut zugeführt werden. Die hier schematisch dargestellten herkömmlichen Filterkerzen 100 können insbesondere ohne größeren technischen Aufwand durch die weiter unten beschriebenen Filterkerzen gemäß der vorliegenden Erfindung ersetzt werden.

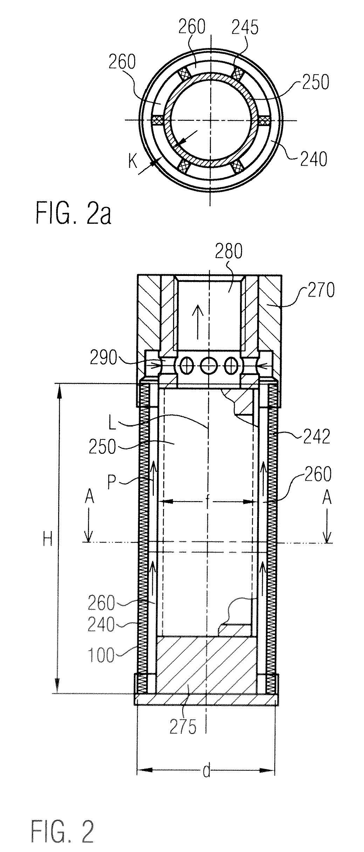

Figur 2 zeigt einen schematischen Längsschnitt durch eine herkömmliche Filterkerze. Figur 2a zeigt einen Schnitt entlang der Linie A-A der Figur 2. Bei der hier dargestellten herkömmlichen Filterkerze mit Durchmesser d dient exemplarisch ein spiralförmig gewundener Draht 242 als Filterkörper 240. Der Draht 242 kann z. B. im Querschnitt im Wesentlichen dreieckförmig ausgebildet sein, wobei die Grundlinie des Dreiecks auf der Außenseite der Kerzenfilterwand liegt und in Längsrichtung der Kerze verläuft, und sich zwischen jeweils zwei benachbarten Windungen des Drahtes in an sich bekannter Weise und daher nicht dargestellt ein sich zu dem Kerzeninneren hin erweiternder Spalt mit einer Spaltbreite von 30 bis 100 $\mu$m an der Außenseite der Kerzenfilterwand bildet. Der Spalt zwischen den Drahtwindungen dient dabei als Fluiddurchlass.

In dem hier dargestellten Beispiel ist der Draht 242, wie aus den Figuren 2 und 2a hervorgeht, über Abstandshalter 245 um einen hohlzylindrischen Innenkörper 250 gewunden, wobei der Innenkörper 250 und der Draht 242 über die Abstandshalter 245 miteinander verbunden, z. B. an mehreren Stellen miteinander verschweißt, sind. Somit dient der Innenkörper 250 gleichzeitig als Träger für den den gewunden Draht 242 umfassenden Filterkörper 240 und verleiht diesem somit eine hohe Stabilität.

Die Abstandshalter 245 sind in diesem Beispiel als Stäbe ausgebildet, die sich entlang der Längsachse L der Filterkerze 100 erstrecken. Sowohl die Abstandshalter 245 als auch der Innenkörper 250 erstrecken sich entlang der Längsachse L über die gesamte Länge des Filterkörpers 240, hier des gewundenen Drahtes 242. Durch den Innenkörper 250 und die Abstandshalter 245 ergeben sich zwischen dem Filterkörper 240 und dem Innenkörper 250 mehrere Filtratkanäle 260. Bei diesem Beispiel wurden sechs Abstandshalter 245 verwendet, sodass sich insgesamt sechs Filtratkanäle 260 ergeben. Eine beliebige andere Anzahl von Abstandshaltern sowie alternative Ausbildungen zum Verbinden des Filterkörpers 240 mit dem Innenkörper 250, beispielsweise durch sternförmiges Ausbilden des Innenkörpers, sind im Stand der Technik bekannt. In allen Fällen bilden sich zwischen dem Filterkörper 240 und dem Innenkörper 250 ein oder mehrere Filtratkanäle 260 aus, wobei die Form dieser Filtratkanäle, insbesondere deren Querschnitt, durch die Form des Filterkörpers 240 und/oder des Innenkörpers 250 bestimmt wird.

In einer herkömmlichen Filterkerze wird durch den Innenkörper 250 das Innenvolumen innerhalb des Filterkörpers 240 erheblich reduziert. Der Innenkörper einer herkömmlichen Filterkerze weist dabei einen vollständig geschlossenen Außenmantel auf, d. h., dass kein Filtrat ins Innere des Innenkörpers eindringen kann. Dabei kann der Innenkörper 250 aus Gewichtsgründen innen hohl, d. h. rohrförmig, ausgebildet sein oder aber massiv ausgebildet sein. Bei einer herkömmlichen Filterkerze mit einem einzigen Filtratablauf 280 ist der Innenkörper 250 auf der dem Filtratablauf gegenüberliegenden Seite der Filterkerze mit einem Endstück 275 verschlossen, welches zudem die Filtratkanäle 260 am unteren Ende der Filterkerze verschließt. Somit bleibt dem durch die Anschwemmschicht und den Filterkörper 240 hindurchtretenden Filtrat lediglich die Möglichkeit, entlang der dargestellten Pfeile P in den Filtratkanälen 260 zum oberen Ende der Filterkerze hin abzuströmen.

In der hier dargestellten Weiterbildung der Filterkerzen mündet das obere Ende der Filterkerze in einem Kopfstück 270, welches über einen Ablauf 280 für das Filtrat verfügt. Aus den Filtratkanälen 260 tritt das Filtrat durch Aussparungen 290, die im Kopfstück 270 für jeden Filtratkanal 260 ausgebildet sind, in den Filtratablauf 280 des Kopfstücks ein, von wo es beispielsweise in eine Rohrleitung eines Registerablaufs eintreten kann. Eine Vielzahl der hier dargestellten Filterkerzen kann mit ihrem jeweiligen Kopfstück 270 mit der entsprechenden Rohrleitung eines Registerablaufs 130 der Figur 1 verbunden werden.

Wie bereits zuvor beschrieben, hat die hier dargestellte herkömmliche Filterkerze den Nachteil, dass der Querschnitt des oder der Filtratkanäle 260 entlang der Längsachse L der Filterkerze über die gesamte Höhe H der aktiven Filterfläche des Filterkörpers 240 konstant bleibt. Da aber über die gesamten Höhe H der aktiven Fläche des Filterkörpers 240 kontinuierlich Filtrat in die Filtratkanäle 260 übertritt, muss auf dem Weg zum Filtratablauf 280 eine ständig zunehmende Menge an Filtrat durch einen gleichbleibenden Querschnitt der Filtratkanäle gefördert werden. Dies ist jedoch nur mit zunehmender Strömungsgeschwindigkeit des Filtrats zum Filtratablauf 280 hin möglich, sodass sich entlang der Längsrichtung L der Filterkerze ein Strömungsprofil des Filtrats ergibt, welches am unteren Ende der Filterkerze einen Stagnationspunkt aufweist und am oberen Ende der Filtratkanäle 260 maximal ist. Ein solches Strömungsprofil verhält sich jedoch gerade entgegengesetzt zum Strömungsprofil des die Außenfläche des Filterkörpers 240 überströmenden Unfiltrats, welches im Allgemeinen, beispielsweise bei der Ausbildung des Anschwemmfilters gemäß Figur 1, mit zunehmender Höhe über dem Boden des Filterkessels 120 abnimmt. Die gegenläufige Entwicklung der Strömungsprofile des Filtrats zwischen Filterkörper 240 und Innenkörper 250 und Unfiltrat an der Außenfläche des Filterkörpers 240 führt wie oben beschrieben zu einer Variation der Druckdifferenz über den Filterkörper entlang der Längsachse der Filterkerze, welche zu einer ungleichmäßigen Anschwemmung des Filterhilfsmittels führt. Dabei ist die Anschwemmung bei Verwendung von kompressiblen Filterhilfsmitteln besonders ungleichmäßig, da diese einen deutlich geringeren Widerstand als die herkömmliche Kieselgur in der Anschwemmschicht erzeugen.

Die vorliegende Erfindung löst dieses Problem durch gezieltes Einwirken auf das Strömungsprofil des Filtrats in dem oder den Filtratkanälen, wobei bevorzugt eine konstante Strömungsgeschwindigkeit oder eine Anpassung der Strömungsgeschwindigkeit des Filtrats an die Strömungsgeschwindigkeit des Unfiltrats an der Außenfläche des Filterkörpers erreicht werden soll.

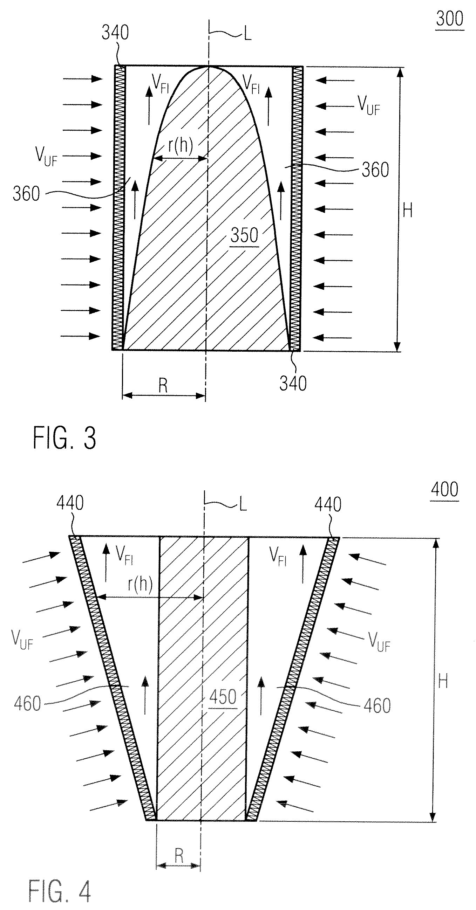

Die Figuren 3 und 4 zeigen schematische Längsschnitte von Filterkerzen gemäß der vorliegenden Erfindung, bei denen eine Variation des Querschnitts des oder der Filtratkanäle durch spezielle Ausbildungen des Innenkörpers und/oder Filterkörpers der Filterkerze erreicht wird. Dabei ist in den Figuren lediglich der Teil der Filterkerze 300 bzw. 400 dargestellt, entlang dessen sich der Filterkörper erstreckt. Die aus dem Stand der Technik bekannten weiteren Elemente, insbesondere solche, die im Zusammenhang mit Figur 2 beschrieben wurden, wie beispielsweise das Kopfstück 270 mit Filtratablauf 280 bzw. das Endstück 275, können selbstverständlich mit den in den Figuren 3 und 4 dargestellten Ausführungen von Filterkörper und Innenkörper kombiniert werden. Dabei können der Filtratablauf 280 sowie die Aussparungen 290 an den jeweiligen Querschnitt der Filtratkanäle am oberen Ende der Filterkerze 300 und 400 in naheliegender Weise angepasst werden.

Figur 3 zeigt einen schematischen Längsschnitt einer speziellen Weiterbildung gemäß der vorliegenden Erfindung, bei welcher ein sich zu einem, in dieser Ausführung am oberen Ende der Filterkerze 300 angeordneten, Filtratablauf (nicht dargestellt) verjüngender Innenkörper 350 innerhalb eines zylindrischen Filterkörpers 340 angeordnet ist. Der hier dargestellte Filterkörper 340 weist exemplarisch einen Radius R auf und erstreckt sich über eine Länge H entlang der Längsachse L der Filterkerze 300. In dieser speziellen Weiterbildung sind sowohl Filterkörper 340 als auch Innenkörper 350 rotationssymmetrisch um die Längsachse L ausgebildet. Von der Unfiltratströmung an der Außenseite des Filterkörpers 340 ist in dieser Figur lediglich die Komponente $V_{UF}$ senkrecht zur Oberfläche des Filterkörpers 340 dargestellt. Die Geschwindigkeitskomponente $V_{FI}$ der Filtratströmung parallel zur Längsachse L der Filterkerze ist in dieser Figur ebenfalls durch Pfeile dargestellt.

Um eine gleichmäßige Anschwemmschicht während der Filtration zu erzeugen, ist eine entlang der gesamten Länge H des Filterkörpers 340 konstante Senkrechtkomponente $V_{UF}$ der Unfiltratströmung wünschenswert. Um darüber hinaus eine Variation der Druckdifferenz über die Filterschicht und den Filterkörper 340 entlang der Längsachse L gering zu halten, ist ein konstantes Strömungsprofil $V_{FI}$ des Filtrats in dem Filtratkanal 360 wünschenswert. Die durch den Filterkörper 340 bis zu einer bestimmten Höhe h über dem unteren Ende des Filterkörpers eintretende Menge an Filtrat muss dabei durch den Querschnitt des Filtratkanals 360 auf dieser Höhe h transportiert werden. Dieser Querschnitt ergibt sich dabei als Differenz zwischen dem zylindrischen Querschnitt des Filterkörpers 340 mit Radius R und dem lokalen kreisförmigen Querschnitt des sich verjüngenden Innenkörpers 350 mit Radius r(h). Bezeichnet man mit r(h) den Radius des Innenkörpers 350 in Abhängigkeit von der Höhe h über dem unteren Ende des Filterkörpers 340, so ergibt sich unter der Annahme konstanter Geschwindigkeitskomponenten $V_{UF}$ und $V_{FI}$ sowie der Randbedingungen, dass Innenkörper 350 und Filterkörper 340 sich am unteren Ende 340 des Filterkörpers berühren, die folgende Abhängigkeit für den Radius des Innenkörpers:

$$r(h) = R\sqrt{1 - \frac{h}{H}} \qquad (1)$$

Für ein konstantes Strömungsprofil der Filtratströmung besitzt der Innenkörper also bevorzugt die Form eines umgekehrten Paraboloids, wobei die konvex gekrümmte Mantelfläche des Innenkörpers 350 für ein Zunehmen des Strömungsquerschnitts zu dem Filtratablauf hin sorgt. Soll die Geschwindigkeit $V_{FI}$ der Filtratströmung entsprechend der Überströmung durch Unfiltrat zum oberen Ende der Filterkerze hin abnehmen, empfiehlt sich eine entsprechend stärkere Krümmung der Mantelfläche des Innenkörpers 350. Da sich Innenkörper 350 und Filterkörper 340 an dessen unteren Ende berühren, kann ein Stagnationspunkt am unteren Ende des Filter-körpers verhindert werden. Es versteht sich, dass die dargestellte Weiterbildung lediglich eine spezielle Weiterbildung für den Fall einer Filterkerze mit einem einzigen Filtratablauf an deren oberen Ende beschreibt. Bei Vorsehen des Filtratablaufs am unteren Ende der Filterkerze 300 ist ein sich nach unten verjüngender Innenkörper 350 entsprechend bevorzugt. Da jedoch die Unfiltratströmung bei Verwendung in einem herkömmlichen Anschwemmfilter gemäß Figur 1 stets zum oberen Ende der Filterkerze hin abnimmt, kann die Krümmung der Mantelfläche des Innenkörpers 350 in diesem Fall geringer ausfallen. Bei Vorsehen eines Filtratablaufs sowohl am oberen als auch am unteren Ende der Filterkerze können die beiden oben beschrieben Formen des Innenkörpers 350 als jeweilige Teile des gesamten Innenkörpers zusammengesetzt werden. Darüber hinaus kann der Innenkörper 350 auch nur als ein Teil des dargestellten Paraboloids ausgebildet werden, beispielsweise derart, dass r(h) stets endlich bleibt.

Figur 4 zeigt einen Längsschnitt einer alternativen Ausführung einer Filterkerze gemäß der vorliegenden Erfindung. In der hier gezeigten Weiterbildung weist der Innenkörper 450 einen entlang der Längsachse L der Filterkerze 400 konstanten Querschnitt auf, während der Filterkörper 440 sich zu dem, in dieser beispielhaften Weiterbildung ebenfalls oben angeordneten, Filtratablauf konisch erweitert. Erneut berühren sich Filterkörper 440 und Innenkörper 450 am untersten Punkt des Filterbereichs der Filterkerze 400, um einen Stagnationspunkt der Filtratströmung zu vermeiden. Der Innenkörper 450 besitzt einen konstanten Radius R, während der Radius r(h) des Filterkörpers 440 zum Filtratablauf hin linear mit der Höhe h über dem unteren Ende des Filterbereichs der Filterkerze 400 zunimmt.

Auch hier ist eine konstante Senkrechtkomponente $V_{UF}$ der Unfiltratströmung auf der Außenfläche des Filterkörpers 440 und eine entlang der Längsachse L konstante vertikale Komponente $V_{FI}$ der Filtratströmung in Richtung Filtratablauf wünschenswert. Eine Rechnung für die Volumenstrombilanz zwischen einströmendem Filtrat und über den lokalen Querschnitt des Filtratkanals 460 abfließenden Filtrat ergibt für den Radius des Filterkörpers 440 den folgenden funktionalen Zusammenhang:

$$r(h) = R + h \Big/ \sqrt{\left(\frac{v_{FI}}{v_{UF}}\right)^2 - 1} \qquad (2),$$

welcher einen Konus beschreibt. Je nach Vorgabe an das Strömungsprofil $V_{FI}$ der Filtratströmung im Filtratkanal 460 kann sich auch eine andere Form des Filterkörpers 440 ergeben. Beispielsweise ergibt sich bei Angleichung an das nach oben hin abnehmende Überströmungsprofil der Unfiltratströmung eine konkav gekrümmte Außenfläche des Filterkörpers 440. Eine Vergleichmäßigung der Anschwemmschicht auf der Außenfläche des Filterkörpers 440 ergibt sich in jedem Fall, falls der Querschnitt des Filtratkanals 460 zum Filtratablauf hin zunimmt. Wie bereits im Zusammenhang mit Figur 3 beschrieben können alternative Formen des Filterkörpers 440 vorgesehen werden, um eine Anordnung eines Filtratablaufs am unteren Ende der Filterkerze 400 bzw. eine Anordnung von Filtratabläufen sowohl am oberen als auch am unteren Ende zu berücksichtigen.

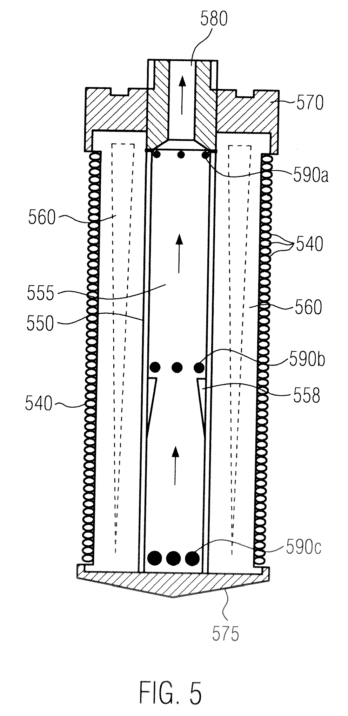

Figur 5 zeigt einen schematischen Längsschnitt einer weiteren Weiterbildung der erfindungsgemäßen Filterkerze, bei welcher ein hohler Innenkörper mit umfänglich angeordneten Öffnungen in seiner Mantelfläche vorgesehen ist. Bei der in Figur 2 gezeigten herkömmlichen Filterkerze ergibt sich wie bereits beschrieben ein Strömungsprofil im Filtratkanal 260, welches an dem dem Filtratablauf 280 gegenüberliegenden Ende der Filterkerze einen Stagnationspunkt aufweist und auf der Seite des Filtratablaufs ein Maximum besitzt. In der Figur 5 ist dieses Strömungsprofil von Filtrat im Filtratkanal einer herkömmlichen Filterkerze in Form eines gestrichelten Keils angedeutet.

Gemäß der Bernoullischen Gleichung führt eine Zunahme der Filtratströmungsgeschwindigkeit jedoch zu einer Zunahme der Druckdifferenz über den Filterkörper 540, wodurch sich insbesondere die relativ leichten kompressiblen Filterhilfsmittel, wie beispielsweise Viskose, im Wesentlichen auf der Seite des Filtratablaufs 580 anlagern. Um die dadurch entstehende ungleichmäßige Ausbildung der Anschwemmschicht zu vermeiden, wird bei der in Figur 5 dargestellten exemplarischen Filterkerze gemäß der vorliegenden Erfindung Filtrat nicht unmittelbar aus dem Filtratkanal 560 abgezogen, sondern indirekt über einen Filtratablauf 580, der mit dem hohlen Innenraum 555 des Innenkörpers 550 verbunden ist. Damit Filtrat aus dem Filtratkanal 560 in diesen Hohlraum 555 übertreten kann, sind entlang der Längsachse der Filterkerze an zwei oder mehr Stellen 590a-c der Mantelfläche des Innenkörpers 550 entlang des Umfangs des im Allgemeinen rotationssymmetrischen Innenkörpers 550 Öffnungen vorgesehen. Es versteht sich, dass die in der Figur gezeigte Weiterbildung mit Öffnungen an drei Stellen 590a-c lediglich eine exemplarische Weiterbildung darstellt und dass insbesondere auch an mehr als drei Stellen Öffnungen vorgesehen werden können, um eine gewünschtes Strömungsprofil der Filtratströmung im Filtratkanal 560 zu erzeugen.

Da der Filtratkanal 560 in dieser Weiterbildung oben und unten durch das Kopfstück 570 bzw. das Endstück 575 der Filterkerze verschlossen ist, kann Filtrat somit lediglich durch diese Öffnungen 590a-c zum Filtratablauf 580 hin strömen, welcher exemplarisch und nicht limitierend am oberen Ende der Filterkerze angeordnet ist. Dabei bestimmt die Gesamtfläche der jeweiligen Öffnungen zusammen mit den hydrodynamischen Verhältnissen im Filtratkanal, d. h. insbesondere dem Druck des Filtrats, wieviel Filtrat an der jeweiligen Stelle durch die Öffnungen in den Hohlraum 555 eintritt. Innerhalb dieses Hohlraums 555 entsteht dann erneut eine Filtratströmung, die zum Filtratablauf 580 hin gerichtet ist, was in der Figur durch Pfeile angedeutet ist. In Kombination mit dieser Filtratströmung kann durch die Größe und/oder Anzahl der Öffnungen 590a-c, sowie deren Lage entlang der Längsachse der Filterkerze das Strömungsprofil der Filtratströmung im Filtratkanal 560 beeinflusst werden.

Erfindungsgemäß werden umfänglich angeordnete Öffnungen an mindestens zwei Stellen entlang der Längsachse des Innenkörpers 550 vorgesehen, dessen Mantel jedoch ansonsten geschlossen ist. Somit kann Filtrat nur an wohl definierte Stellen 590a-c aus dem Filtratkanal 560 in den Innenkörper 550 eintreten. Durch Vorsehen von Öffnungen an dem im Filtratablauf 580 gegenüberliegenden Ende der Filterkerze kann insbesondere der Stagnationspunkt herkömmlicher Filterkerzen im Filtratkanal 560 vermieden werden.

Gemäß einer speziellen Weiterbildung kann die Gesamtfläche der Öffnungen derart variiert werden, dass sie mit zunehmender Entfernung vom Filtratablauf 580 zunimmt, so wie es durch die relative Größe der Öffnung 590 a-c in der Figur angedeutet ist. Dadurch kann der schon mehrfach beschriebenen Tendenz einer Zunahme der Strömungsgeschwindigkeit des Filtrats im Inneren 555 des Innenkörpers 550 zum Filtratablauf 580 hin entgegengewirkt werden, da bereits eine größere Menge von Filtrat am unteren Ende der Filterkerze durch die Öffnungen 590c in den Innenraum eintritt. Die Zunahme der Strömungsgeschwindigkeit des Filtrats im Innenraum 555 wird somit reduziert, wodurch unerwünschte Effekte aufgrund des hydrodynamischen Drucks vermieden werden können.

Wie zuvor beschrieben kann alternativ zu einem Filtratablauf 580 am oberen Ende der Filterkerze auch nur ein Filtratablauf am unteren Ende der Filterkerze vorgesehen sein, wobei in diesem Fall die Gesamtfläche der Öffnungen nach oben zunehmen kann. Ebenso können Filtratabläufe sowohl am unteren als auch am oberen Ende der Filterkerze vorgesehen sein, wobei die Gesamtfläche der Öffnungen in Abhängigkeit von dem kleineren von den beiden Abständen von den jeweiligen Filtratabläufen vorgegeben werden kann. Insbesondere besäßen in diesem Fall die in einem mittleren Bereich der Filterkerze angeordneten Öffnungen 590b eine maximale Gesamtfläche.

In der hier dargestellten speziellen Weiterbildung weist der Innenkörper 550 an drei Stellen 590a-c umfänglich angeordneten Öffnungen auf, wobei sich die mittleren Öffnungen 590b im Bereich der mittleren 20 %, bevorzugt 10 %, der Länge des Innenkörpers 550 befinden können. Auf diese Weise kann das Strömungsprofil der Filtratströmung im Filtratkanal 560 auch für lange Filterkerzen, beispielsweise mit einer Länge größer als 2 m, gezielt beeinflusst werden. Wie bereits erwähnt können jedoch an weiteren Stellen zusätzliche Öffnungen vorgesehen werden, beispielsweise in einem regelmäßigen Abstand von etwa 20cm entlang des Innenkörpers.

Die hier dargestellte Weiterbildung weist zudem Reduzierungselemente 558 im Innenraum 555 des Innenkörpers 550 auf, durch die der Querschnitt des hohlen Innenraums 555 unmittelbar stromaufwärts von den Öffnungen 590b an einer oder mehreren Stellen reduziert werden kann. Es versteht sich, dass solche Verjüngungen an mehr als der einen gezeigten Stelle, insbesondere für alle Öffnungen, vorgesehen sein können. Alternativ kann der Querschnitt des Innenrohrs, beispielsweise durch Verdickung der Innenrohrwand, unmittelbar stromaufwärts von den Öffnungen reduziert werden. Wie bereits erwähnt, können die Reduzierungselemente 558 bzw. Wandverdickungen auch unmittelbar im Bereich der Öffnungen vorgesehen sein, wobei die Öffnungen neben segmentartigen Reduzierungselementen angeordnet oder durch die Reduzierungselemente bzw. Wandverdickungen hindurch vorgesehen sein können. Durch Reduzierung des Querschnittes ergibt sich gemäß dem Venturi-Effekt jedoch eine Erhöhung der lokalen Strömungsgeschwindigkeit, wodurch eine Druckdifferenz zwischen dem Filtratkanal 560 und dem Innenraum 555 erhöht werden kann, sodass vermehrt Filtrat aus dem Filtratkanal 560 durch die Öffnungen 590b in den Innenkörper 550 gesaugt werden kann. Das verjüngende Element 558 ist dabei stromaufwärts von den Öffnungen 590b bezüglich der Strömungsrichtung des Filtrats im Innenraum 555 angeordnet, um den Venturi-Effekt im Nachlauf im Bereich der Öffnung 590b zu erzeugen.

Die Lage, Größe und Anzahl der Öffnungen kann hydrodynamisch in Abhängigkeit von einem vorgegebenen Überströmungsprofil durch das Unfiltrat an der Außenfläche des Filterkörpers 540 und den gewünschten Filtratströmungsprofilen im Filtratkanal 560 bzw. Innenraum 555 des Innenkörpers 550 berechnet werden. Es versteht sich, dass die spezielle Weiterbildung des Innenkörpers mit lokal vorgesehenen Öffnungen gemäß der obigen Beschreibung auch mit Filtratkanälen 560 mit variablem Querschnitt, wie im Zusammenhang mit den Figuren 3 und 4 beschrieben, kombiniert werden kann. Dies kann in besonders einfacher Weise in Kombination mit der Weiterbildung der Figur 4 erfolgen. Entsprechend der Variation des Querschnitts des Filtratkanals ergibt sich eine Modifikation der Anordnung und/oder der Gesamtfläche der Öffnungen der Figur 5.

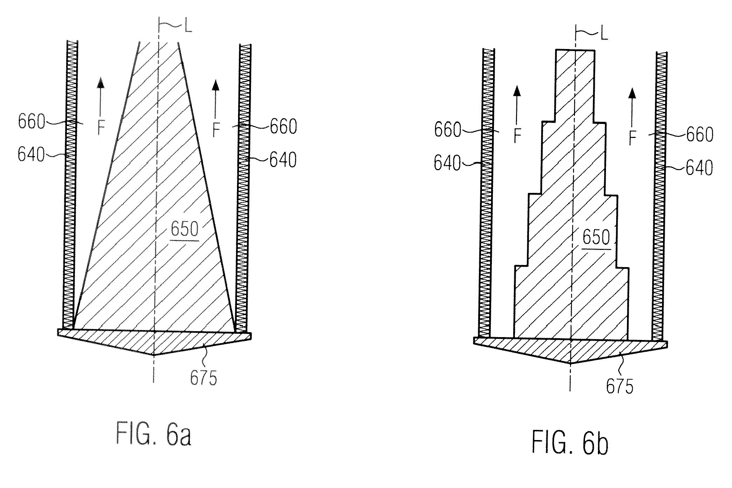

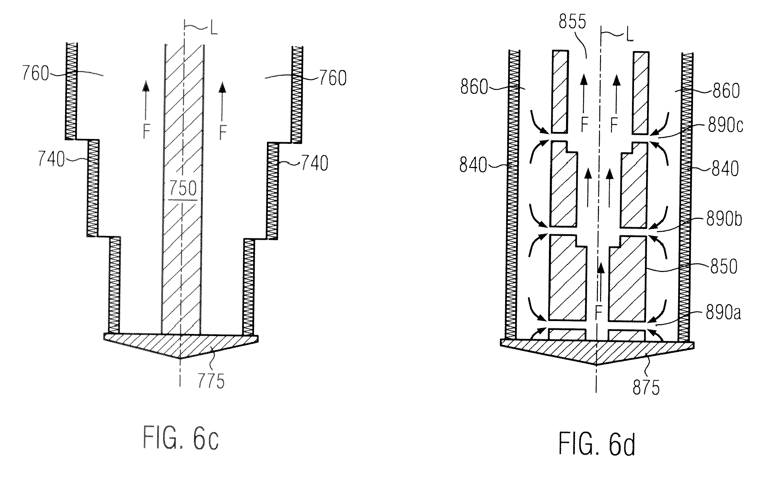

In der Figur 6 sind weitere alternative Weiterbildungen von Filterkerzen gemäß der vorliegenden Erfindung dargestellt. In allen Teilfiguren wird von einem Filtratablauf am oberen Ende der Filterkerze ausgegangen, wobei das untere Ende der Filterkerze stets durch ein Endstück 675, 775 bzw. 875 verschlossen ist.

In den Teilfiguren a) und b) sind Filterkerzen mit zylindrischen Filterkörpern 640 und sich nach oben hin verjüngenden Innenkörpern 650 gezeigt. Dabei hat der in Teilfigur a) dargestellte Innenköper die Form eines Konus, während sich der in Teilfigur b) dargestellte Innenkörper stufenweise verjüngt. Beide Formen bewirken eine Erweiterung des Querschnitts des Filtratkanals 660 zum Filtratablauf hin, wodurch eine Vergleichmäßigung der Anschwemmschicht erzielt wird, wenn auch in geringerem Maße als bei der Ausbildung nach Figur 3. Allerdings lassen sich die Innenkörper 650 der Teilfiguren a) und b) leichter fertigen.

In der Teilfigur c) ist der Filterkörper 740 derart ausgebildet, dass sich sein Querschnitt zum Filtratablauf hin stufenweise erweitert. Dies führt bei zylindrischem Innenkörper 750 ebenfalls zu einer Erweiterung des Querschnitts der Filtratkanals 760.

Die Teilfigur d) zeigt schließlich eine Variation der Weiterbildung der Figur 5, wobei zusätzlich zu den Bohrungen 890a-c des Innenkörpers 850 ein sich zum Filtratablauf hin stufenweise erweiternder Innenraum 855 des Innenkörpers 850 vorgesehen ist. Dies führt nach dem bekannten Prinzip zu einer Vergleichmäßigung der Filtratströmung F im Innenraum 855 des Innenkörpers und somit indirekt zu einer Vergleichmäßigung der Anschwemmung an den Filterköper 840. Letzterer ist in dieser Weiterbildung zylindrisch ausgebildet, sodass sich Filtratkanäle 860 mit gleichbleibendem Querschnitt bilden.

Eine Kombination der in der Figur 6 gezeigten Weiterbildungen miteinander und/oder mit den Weiterbildungen der Figuren 3 bis 5 ist denkbar, wenn sie dem Erreichen eines gewünschten Strömungsprofils des Filtrats dient.

Die im Vorhergehenden beschriebenen Filterkerzen gemäß der vorliegenden Erfindung wurden entwickelt, um durch Beeinflussung der Filtratströmung innerhalb der Filterkerze eine Vergleichmäßigung der Anschwemmschicht auf der Außenfläche des Filterkörpers entlang der gesamten Länge der Filterkerze zu erreichen. Um eine solche Vergleichmäßigung zu erzielen, werden Formen von Filterkörper und/oder Innenkörper sowie Anordnungen der Filtratabläufe derart vorgesehen, dass sich ein möglichst gleichmäßiges Strömungsprofil der Filtratströmung im Filtratkanal ergibt oder dass dieses Strömungsprofil an ein Überströmungsprofil des Unfiltrats an der Außenfläche des Filterkörpers angepasst wird. Auf diese Weise können Variationen der Druckdifferenzen über die Filterschicht aufgrund von entlang der Längsachse der Filterkerze variierenden Unterschieden zwischen den Strömungsgeschwindigkeiten von Filtrat und Unfiltrat reduziert werden, sodass sich eine gleichmäßigere Filterschicht, sowohl in Hinblick auf deren Dicke als auch deren Homogenität in Bezug auf die Partikelverteilung, ergibt. Die beschriebenen Filterkerzen sind dabei besonders für den Einsatz in Kombination mit kompressiblen Filterhilfsmitteln, wie beispielsweise Viskose, geeignet.

Durch Vergleichmäßigung der Anschwemmschicht kann eine mittlere Dicke der Anschwemmschicht reduziert werden, ohne eine wirkungsvolle Filtration zu gefährden, wodurch Filterhilfsmittel eingespart werden kann und zudem die Standzeit des Anschwemmfilters verlängert werden kann. Darüber hinaus können insbesondere kompressible Filterhilfsmittel zum Einsatz kommen, welche sich in jüngster Zeit bei der Filtration flüssiger Lebensmittel als vorteilhaft gegenüber der herkömmlichen Kieselgur gezeigt haben. Die beschriebenen Filterkerzen können zudem ohne größeren Aufwand oder Umbau in bestehenden Anschwemmfiltern eingesetzt werden, was zusätzlich Installationskosten spart.

**Patentansprüche**

1. Filterkerze für Anschwemmfilter zur Filtrierung und / oder Stabilisierung von Fluiden, insbesondere von Bier, mit einem Filterkörper (340, 440, 540), einem im Innenraum des Filterkörpers angeordneten Innenkörper (350, 450, 550) und wenigstens einem zwischen dem Filterkörper (340, 440, 540) und dem Innenkörper (350, 450, 550) gebildeten Filtratkanal (360, 460, 560),
   **dadurch gekennzeichnet, dass**
   der Filterkörper (340, 440, 540) und / oder der Innenkörper (350, 450, 550) derart ausgebildet sind, dass einer Filtratströmung in dem Filtratkanal (360, 460, 560) bei Betrieb der Filterkerze ein Strömungsprofil gegeben wird, das eine Vergleichmäßigung der Anschwemmung eines Filterhilfsmittels an einer äußeren Fläche des Filterkörpers (340, 440, 540) bewirkt.

2. Filterkerze nach Anspruch 1, wobei der Filtratströmung in dem Filtratkanal (360, 460, 560) ein Strömungsprofil der Art gegeben wird, dass in Kombination mit einem Strömungsprofil einer Überströmung der äußeren Fläche des Filterkörpers (340, 440, 540) mit Unfiltrat eine im Wesentlichen konstante Druckdifferenz über den Filterkörper (340, 440, 540) entlang der Filterkerze vorliegt.

3. Filterkerze nach Anspruch 1 oder 2, wobei die Filterkerze mindestens einen Filtratablauf aufweist, und wobei sich ein Querschnitt des Filtratkanals (340, 440) zu dem Filtratablauf hin erweitert.

4. Filterkerze nach Anspruch 3, wobei sich ein Querschnitt des Innenkörpers (350) zu dem Filtratablauf hin verjüngt und / oder sich ein Querschnitt des Filterkörpers (440) zu dem Filtratablauf hin erweitert.

5. Filterkerze nach Anspruch 3 oder 4, wobei der Innenkörper (350) zumindest teilweise als sich zu dem Filtratablauf hin verjüngendes elliptisches Paraboloid oder sich zu dem Filtratablauf hin verjüngender Konus ausgebildet ist, und / oder wobei der Filterkörper (440) zumindest teilweise als sich zu dem Filtratablauf hin erweiternder Konus ausgebildet ist.

6. Filterkerze nach Anspruch 1 oder 2, wobei der Innenkörper (550, 850) im Wesentlichen rohrförmig ausgebildet ist und wenigstens einen Filtratablauf (580) aufweist und weiterhin wenigstens an zwei Stellen entlang seiner Längsachse umfänglich angeordnete Öffnungen (590a-c, 890a-c) aufweist, die derart ausgebildet sind, dass Filtrat von dem Filtratkanal (560, 860) in einen Innenraum (555, 855) des Innenkörpers (550, 850) eintreten kann.

7. Filterkerze nach Anspruch 6, wobei ein Innenraum (855) des Innenkörpers (850) zumindest teilweise derart ausgebildet ist, dass sich sein Querschnitt zu dem Filtratablauf hin erweitert.

8. Filterkerze nach Anspruch 6 oder 7, wobei eine Anzahl und / oder Größe der Öffnungen (590a-c, 890a-c) derart entlang der Längsachse des Innenkörpers (550, 850) variiert, dass das die Anschwemmung vergleichmäßigende Strömungsprofil in dem Filtratkanal (560, 860) gebildet wird.

9. Filterkerze nach einem der Ansprüche 6 bis 8, wobei eine Gesamtfläche der Öffnungen (590a-c, 890a-c) an einer Stelle entlang der Längsachse des Innenkörpers (550, 850) umso größer ist, je weiter die Stelle von dem wenigstens einen Filtratablauf (580) entfernt ist.

10. Filterkerze nach Anspruch 9, wobei der Innenkörper (550, 850) nur einen Filtratablauf (580) aufweist, und wobei die Gesamtfläche der Öffnungen (590c, 890a) an der dem Filtratablauf (580) fernen Stelle größer als die Gesamtfläche der Öffnungen (590a, 890c) an der dem Filtratablauf (580) nahen Stelle ist.

11. Filterkerze nach einem der Ansprüche 6 bis 9, wobei der Innenkörper zu seinen beiden Enden hin Öffnungen und weiterhin im Wesentlichen mittig angeordnete Öffnungen aufweist.

12. Filterkerze nach einem der Ansprüche 6 bis 11, wobei der Innenkörper (550, 850) weiterhin ein oder mehrere verjüngende Elemente (558) aufweist, die derart ausgebildet sind, dass sie einen Querschnitt des Innenkörpers (550, 850) stromaufwärts der Öffnungen (590b) verjüngen.

13. Anschwemmfilter zur Filtrierung und / oder Stabilisierung von Fluiden, insbesondere von Bier, mit einer Vielzahl von Filterkerzen (100) gemäß einem der vorhergehenden Ansprüche und mit einem Filterkessel (120) mit mindestens einem Zulauf (112) für Unfiltrat, einem Unfiltratraum (125) und mindestens einem Ablauf (130) für das Filtrat, wobei die Vielzahl der Filterkerzen (100) in dem Unfiltratraum (125) angeordnet sind.

14. Anschwemmfilter nach Anspruch 13, weiterhin wenigstens einen Ablauf (114) für das Unfiltrat umfassend, wobei der Zulauf (112) für das Unfiltrat in einem Bereich unterhalb der Filterkerzen (100) angeordnet ist und der Ablauf (114) für das Unfiltrat am oder über dem oberen Ende der Filterkerzen (100) angeordnet ist.

15. Verwendung einer oder mehrerer Filterkerzen nach einem der Ansprüche 1 bis 12 zur Filtrierung und / oder Stabilisierung von Fluiden, insbesondere von Bier, mit einem oder mehreren kompressiblen Filterhilfsmitteln, bevorzugt mit einem Zellstoff oder einer Zellulose, insbesondere mit Viskose.

FIG. 1

FIG. 2a

FIG. 2

FIG. 3

FIG. 4

FIG. 5

FIG. 6b

FIG. 6a

FIG. 6c

FIG. 6d

Europäisches Patentamt
European Patent Office
Office européen des brevets

**EUROPÄISCHER RECHERCHENBERICHT**

Nummer der Anmeldung

EP 15 19 8297

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 169 109 A (GENE HIRS) 9. Februar 1965 (1965-02-09) * Spalte 3, Zeile 48 - Zeile 63; Abbildungen 3,6 * | 1-5, 13-15 | INV. B01D29/15 B01D29/52 B01D29/92 |
| X | US 5 106 501 A (YANG VUE X [US] ET AL) 21. April 1992 (1992-04-21) * Spalte 8, Zeile 16 - Zeile 45; Abbildung 6 * | 1,2,6-15 | |
| X | GB 2 067 910 A (SCHNEIDER CO INC J R) 5. August 1981 (1981-08-05) * Seite 4, Zeile 94 - Zeile 116; Abbildungen * | 1-5, 13-15 | |
| X | DE 36 44 489 C1 (FILTAN GMBH) 18. August 1988 (1988-08-18) * das ganze Dokument * | 1-5 | |
| X | DE 20 2006 014962 U1 (MANN & HUMMEL GMBH [DE]) 7. Februar 2008 (2008-02-07) * das ganze Dokument * | 1-5 | RECHERCHIERTE SACHGEBIETE (IPC) |
| A,D | EP 1 243 303 B1 (STEINECKER MASCHF ANTON [DE]) 20. Oktober 2004 (2004-10-20) * das ganze Dokument * | 1-15 | B01D |

Der vorliegende Recherchenbericht wurde für alle Patentansprüche erstellt

| Recherchenort | Abschlußdatum der Recherche | Prüfer |
|---|---|---|
| München | 11. April 2016 | Hilt, Daniel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 19 8297

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-04-2016

| Im Recherchenbericht angeführtes Patentdokument | | Datum der Veröffentlichung | Mitglied(er) der Patentfamilie | | Datum der Veröffentlichung |
|---|---|---|---|---|---|
| US 3169109 | A | 09-02-1965 | KEINE | | |
| US 5106501 | A | 21-04-1992 | KEINE | | |
| GB 2067910 | A | 05-08-1981 | CA | 1159770 A | 03-01-1984 |
| | | | DE | 3102670 A1 | 17-12-1981 |
| | | | FR | 2474330 A1 | 31-07-1981 |
| | | | GB | 2067910 A | 05-08-1981 |
| | | | IT | 1142245 B | 08-10-1986 |
| | | | JP | S6340122 B2 | 09-08-1988 |
| | | | JP | S56121604 A | 24-09-1981 |
| | | | NL | 8100416 A | 17-08-1981 |
| | | | US | 4282105 A | 04-08-1981 |
| DE 3644489 | C1 | 18-08-1988 | DE | 3644489 C1 | 18-08-1988 |
| | | | JP | S63171612 A | 15-07-1988 |
| | | | US | 4904384 A | 27-02-1990 |
| DE 202006014962 | U1 | 07-02-2008 | DE | 202006014962 U1 | 07-02-2008 |
| | | | EP | 1905497 A1 | 02-04-2008 |
| EP 1243303 | B1 | 20-10-2004 | AT | 279969 T | 15-11-2004 |
| | | | CZ | 20032776 A3 | 14-04-2004 |
| | | | DE | 50104201 D1 | 25-11-2004 |
| | | | EP | 1243303 A1 | 25-09-2002 |
| | | | JP | 2004528164 A | 16-09-2004 |
| | | | WO | 02074413 A1 | 26-09-2002 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1243303 B1
- EP 1243301 B1
- EP 1250948 B1
- EP 1243300 B1